(19)

**Europäisches Patentamt**
**European Patent Office**
**Office européen des brevets**

(11) **EP 3 751 187 B1**

(12) **EUROPEAN PATENT SPECIFICATION**

(45) Date of publication and mention
of the grant of the patent:
**17.12.2025 Bulletin 2025/51**

(21) Application number: **19750644.7**

(22) Date of filing: **08.02.2019**

(51) International Patent Classification (IPC):
*F21S 2/00* *(2016.01)*    *F21V 5/00* *(2018.01)*
*F21V 13/12* *(2006.01)*    *G02B 5/18* *(2006.01)*
*G02B 27/30* *(2006.01)*    *G09F 19/12* *(2006.01)*
*B60Q 1/52* *(2006.01)*    *F21S 41/16* *(2018.01)*
*F21W 103/60* *(2018.01)*    *F21W 111/02* *(2006.01)*
*F21W 111/04* *(2006.01)*    *F21W 111/06* *(2006.01)*
*F21Y 115/30* *(2016.01)*    *G02B 30/56* *(2020.01)*
*G02B 27/42* *(2006.01)*

(52) Cooperative Patent Classification (CPC):
**F21S 41/285; F21S 41/16; F21S 43/13;**
**F21S 43/26; G02B 27/18; G02B 27/30;**
**G02B 27/4205; G02B 30/56;** F21W 2103/60;
G09F 19/18; G09F 21/048

(86) International application number:
**PCT/JP2019/004739**

(87) International publication number:
**WO 2019/156244 (15.08.2019 Gazette 2019/33)**

(54) **ILLUMINATION DEVICE, METHOD OF DESIGNING ILLUMINATION DEVICE, AND DESIGNING DEVICE**

BELEUCHTUNGSVORRICHTUNG, VERFAHREN ZUM ENTWURF EINER
BELEUCHTUNGSVORRICHTUNG UND ENTWURFSVORRICHTUNG

DISPOSITIF D'ÉCLAIRAGE, SON PROCÉDÉ DE CONCEPTION ET DISPOSITIF DE CONCEPTION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **09.02.2018 JP 2018022341**

(43) Date of publication of application:
**16.12.2020 Bulletin 2020/51**

(73) Proprietor: **Dai Nippon Printing Co., Ltd.**
**Tokyo 162-8001 (JP)**

(72) Inventors:
• **KURASHIGE, Makio**
**Tokyo 162-8001 (JP)**

• **NISHIO, Shumpei**
**Tokyo 162-8001 (JP)**
• **NAKAI, Toshiyuki**
**Tokyo 162-8001 (JP)**

(74) Representative: **Müller-Boré & Partner**
**Patentanwälte PartG mbB**
**Friedenheimer Brücke 21**
**80639 München (DE)**

(56) References cited:
EP-A2- 1 916 153        WO-A1-2017/217420
WO-A1-2017/217420      DE-A1- 102015 012 416
DE-B4- 102006 050 548  JP-A- 2015 132 707
JP-A- 2016 055 691      JP-A- 2016 101 797

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to an illumination device using a coherent light beam, a design method of the illumination device, and a design device of the illumination device.

Background Art

A laser light source that emits coherent light beams has an emission intensity higher than that of an LED (Light Emitting Device). Since light beams emitted from a laser light source are coherent, the laser light source has advantages in that light distribution can be accurately controlled, and that the light beam can be delivered to a distant place.

JP2012-146621A1 discloses a vehicle lamp that two-dimensionally scans laser light beams by a light deflector so as to form a predetermined light distribution pattern through a projection lens.

When laser light beams are used for displaying particular information on a road surface, for example, since its beam diameter is small, illumination blurring of an edge of a character or a pattern showing information can be suppressed, so that the information can be sharply displayed as compared with LED light beams.

In addition, the laser light beams are suitable for illuminating a distant place, because expansion of its beam diameter is smaller than that of an LED light beam, even when the laser light beams illuminate a distant place. However, even the beam diameter of the laser light beam increases as it illuminates road surface at a distant place, an illumination range may extend in a traveling direction of the laser light beams. Thus, when predetermined information is displayed on a distant road surface by using the laser light beams, the information is displayed in an extended state on a road surface. Thus, there is a possibility that the displayed information cannot be correctly recognized.

WO 2017/217420 A1 discloses an illumination device that illuminates an illuminated area having a first direction and a second direction that intersects the first direction, the illumination device comprising a light source that emits coherent light and a diffractive optical element that diffracts coherent light incident from the light source. The diffractive optical element diffracts the incident coherent light so that the width of the illuminated area, said width being in the second direction, gradually increases in the first direction of the illuminated area from the side closer to the diffractive optical element.

JP 2015 132707 A discloses a display device that projects a predetermined projection image on a road surface, the display device comprising: a laser light source that emits a laser beam; and a transmission type hologram that receives the laser light emitted from the laser light source and forms a transmission type hologram on the road surface.

DE 10 2015 012416 A1 discloses an illuminating device and a method for projecting a pre-definable light pattern using the illuminating device of the vehicle into an area surrounding the vehicle. A projection surface is determined in the area surrounding the vehicle, a position of a predefined observer has been determined or provided, and a light unit of the illuminating device is controlled pixel-wise according to the determined projection surface and the determined position of the predefined observer in order to produce the pre-definable light pattern.

EP 1 916 153 A2 discloses a method involving producing a projection object e.g. park symbol, at a projection location outside of a motor vehicle by a projection unit. An anticipated target position of the motor vehicle is optically marked by the projection object, where the object is formed three-dimensionally.

DE 10 2006 050548 B4 discloses a method involving producing a projection object as warning reference for other motorists at a projection point outside of a motor vehicle by a projection unit that is provided at the motor vehicle. The situation information relative to the traffic situation existing in the environment of the vehicle is determined by an information receiving unit provided in the vehicle. A preferred projection point outside of the motor vehicle is determined for production of the projection object based on the situation information.

Disclosure of The Invention

The present disclosure is to provide an illumination device that allows a particular observer to correctly recognize predetermined information, even when the information is displayed by using a coherent light beam on a distant place, a design method of the illumination device, and a design device of the illumination device. The underlying technical problem of the present disclosure is solved by the illumination device and the design method of an illumination device having the features of the independent claims, respectively. Additional embodiments are defined in the dependent claims.

A first illumination device according to this disclosure is an illumination device that projects a projection pattern including information onto a projection plane, comprising:

a light source that emits a coherent light beam; and
a diffractive optical element that diffracts the coherent light beam from the light source and projects the projection pattern;

wherein the diffractive optical element has a diffraction characteristic that allow an observer who sees the projection pattern from a first viewpoint position based on a position and a direction of the diffractive optical element (i.e., using a position and a direction of the diffractive optical element as a standard, or having a position and a direction with respect to the diffractive optical element), to visually recognize the information with a predetermined size, a predetermined shape and a predetermined inclination angle.

A second illumination device according to this disclosure is an illumination device that projects a projection pattern including information onto a projection plane, comprising:

a light source that emits a coherent light beam; and
a diffractive optical element that diffracts the coherent light beam from the light source and projects the projection pattern;
wherein the diffractive optical element has a diffraction characteristic that allow, as compared with a case in which the projection pattern is seen from a position of the diffractive optical element, the information to be visually recognized more easily when the projection pattern is seen from a first viewpoint position different from the position of the diffractive optical element.

In embodiments falling under the scope of the claims, in the first and second illumination devices according to this disclosure, the diffractive optical element has the diffraction characteristic that allows an observer who sees the projection pattern from the first viewpoint position, to visually recognize the information in a plane that is not parallel to the projection plane.

A third illumination device according to this disclosure is an illumination device that projects a projection pattern including information onto a projection plane, comprising:

a light source that emits a coherent light beam; and
a diffractive optical element that diffracts the coherent light beam from the light source and projects the projection pattern;
wherein the diffractive optical element has a diffraction characteristic that allow an observer who sees the projection pattern from a first viewpoint position, to visually recognize the information in a plane that is not parallel to the projection plane.

In the first to third illumination devices according to this disclosure, the diffractive optical element may have the diffraction characteristic that allow a size of the projection pattern on the projection plane to differ depending on a distance from the first viewpoint position to respective points on the projection pattern.

In the first to third illumination devices according to this disclosure, the diffractive optical element may have the diffraction characteristic that allow radiances of the projection pattern to be uniform, when the projection pattern is observed from the viewpoint position.

In the first to third illumination devices according to this disclosure, the diffractive optical element may have the diffraction characteristic that allow luminances of the projection pattern to be uniform, when the projection pattern is observed from the first viewpoint position.

In the first to third illumination devices according to this disclosure, a minimum value $X_{min}$ of radiances of the projection pattern when the projection pattern is observed from the first viewpoint position, a maximum value $X_{max}$ of the radiances, and an average value $X_{ave}$ of the radiances may satisfy following two expressions (1) and (2):

$$(X_{max}-X_{ave})/X_{ave} \leq 0.4 \qquad \text{... expression (1)}$$

and

$$(X_{ave}-X_{min})/X_{ave} \leq 0.4 \qquad \text{... expression (2).}$$

In the first to third illumination devices according to this disclosure, a minimum value $Y_{min}$ of irradiances at respective points on the projection pattern, a maximum value $Y_{max}$ of the irradiances, and an average value $Y_{ave}$ of the irradiances may satisfy following two expressions (3) and (4):

$$(Y_{max}-Y_{ave})/Y_{ave} \leq 0.4 \qquad \text{... expression (3)}$$

and

$$(Y_{ave}-Y_{min})/Y_{ave} \leq 0.4 \qquad \text{... expression (4).}$$

In the first to third illumination devices according to this disclosure, a minimum value $Z_{min}$ of luminances of the projection pattern when the projection pattern is observed from the first viewpoint position, a maximum value $Z_{max}$ of the luminances, and an average value $Z_{ave}$ of the luminances may satisfy following two expressions (5) and (6):

$$(Z_{max}-Z_{ave})/ Z_{ave} \leq 0.4 \qquad \text{... expression (5)}$$

and

$$(Z_{ave}-Z_{min})/ Z_{ave} \leq 0.4 \qquad \text{... expression (6).}$$

In the first to third illumination devices according to this disclosure, a minimum value $W_{min}$ of illuminances at respective points on the projection pattern, a maximum value $W_{max}$ of the illuminances, and an average value $W_{ave}$ of the illuminances may satisfy following two expressions (7) and (8):

$$(W_{max}-W_{ave})/ W_{ave} \leq 0.4 \qquad \text{... expression (7)}$$

and

$$(W_{ave}-W_{min})/ W_{ave} \leq 0.4 \qquad \text{... expression (8).}$$

In the first to third illumination devices according to this disclosure, the diffractive optical element may have the diffraction characteristic that allow an observer to visually recognize patterns that are different from each other at least in one of a size, a shape and an inclination angle, between a case in which the observer sees the projection pattern from the first viewpoint position, and a case in which the observer sees the projection pattern from a second viewpoint position different from the first viewpoint position.

In the first to third illumination devices according to this disclosure, the diffractive optical element may have the diffraction characteristic that allow an observer to visually recognize different information, between a case in which the observer sees the projection pattern from the first viewpoint position, and a case in which the observer sees the projection pattern from a second viewpoint position different from the first viewpoint position.

In the first to third illumination devices according to this disclosure, the light source may emit the coherent light beam of a predetermined radiant flux such that information is visually recognized with predetermined radiances, when the projection pattern is seen from the first viewpoint position in a first line-of-sight direction.

In the first to third illumination devices according to this disclosure, the light source may emit coherent light beams of a predetermined radiant flux such that information is visually recognized with predetermined luminances, when the projection pattern is seen from the first viewpoint position in a first line-of-sight direction.

The first to third illumination devices according to this disclosure may comprise a shaping optical system that collimates coherent light beams emitted from the light source,
wherein the diffractive optical element diffracts the coherent light beam collimated by the shaping optical system and projects the projection pattern.

In the first to third illumination devices according to this disclosure, the shaping optical system may regulate a traveling direction of the coherent light beam emitted from the light source so as to suppress blurring of the projection pattern.

A first design method of an illumination device according to this disclosure is a design method of an illumination device comprising:

a step of setting observation-condition information including a viewpoint position and a line-of-sight direction of an observer, and including information to be observed by the observer;
a step of calculating, based on the observation-condition information, projection-condition information including a position in a projection plane onto which a projection pattern is projected, and a shape and a size of the projection pattern on the projection plane; and
a step of calculating, based on the projection-condition information and a position of an illumination device that projects the projection pattern onto the projection plane, illumination-condition information including a radiant-intensity distribution of a coherent light beam emitted from the illumination device toward the projection plane.

A second design method of an illumination device according to this disclosure is a design method of an illumination device comprising:

a step of setting observation-condition information including a viewpoint position and a line-of-sight direction of an observer, and including information to be observed by the observer;

a step of calculating, based on the observation-condition information, projection-condition information including a position in a projection plane onto which a projection pattern is projected, and a shape and a size of the projection pattern on the projection plane; and

a step of calculating, based on the projection-condition information and a position of an illumination device that projects the projection pattern onto the projection plane, illumination-condition information including a luminous-intensity distribution of a coherent light beam emitted from the illumination device toward the projection plane.

In the first and second design methods of an illumination device according to this disclosure, the illumination device may be provided with a light source that emits coherent light beams, and a diffractive optical element that diffracts the coherent light beams from the light source and projects the projection pattern, and the design method may further comprise a step of designing a diffraction characteristic of the diffractive optical element based on the illumination-condition information.

In the first and second design methods of an illumination device according to this disclosure, the diffraction characteristic may be designed such that, when the projection pattern is seen from the viewpoint position in the line-of-sight direction, the projection pattern is visually recognized with a predetermined size, a predetermined shape and a predetermined inclination angle.

In the first and second design methods of an illumination device according to this disclosure, in order that, when the projection pattern is seen from the viewpoint position in the line-of-sight direction, the information is visually recognized in a plane that is not parallel to the projection plane, the observation-condition information may include information related to a direction of the not parallel plane.

In the first and second design methods of an illumination device according to this disclosure, the step of calculating the projection-condition information may calculate a shape and a size of the projection pattern, such that the shape and the size of the projection pattern differ depending on a distance from the viewpoint position to respective points on the projection pattern.

In the first and second design methods of an illumination device according to this disclosure, the observation-condition information may include a radiance distribution which is set such that radiances of the projection pattern are uniform, when the projection pattern is observed from the viewpoint position.

In the first and second design methods of an illumination device according to this disclosure, the observation-condition information may include a luminance distribution which is set such that luminances of the projection pattern are uniform, when the projection pattern is observed from the viewpoint position.

In the first and second design methods of an illumination device according to this disclosure, in the step of calculating the projection-condition information, an irradiance distribution in an area of the projection plane onto which the projection pattern is projected may be calculated based on the radiance distribution.

In the first and second design methods of an illumination device according to this disclosure, in the step of calculating the projection-condition information, an illuminance distribution in an area of the projection plane onto which the projection pattern is projected may be calculated based on the luminance distribution.

In the first and second design methods of an illumination device according to this disclosure, in the step of calculating the illumination-condition information, the radiant-intensity distribution may be calculated based on the irradiance distribution.

In the first and second design methods of an illumination device according to this disclosure, the luminous-intensity distribution may be calculated based on the illuminance distribution.

In the first and second design methods of an illumination device according to this disclosure, in the step of calculating the illumination-condition information, the radiant-intensity distribution may be calculated such that irradiances are uniform in an area of the projection plane onto which the projection pattern is projected.

In the first and second design methods of an illumination device according to this disclosure, in the step of calculating the illumination-condition information, the luminous-intensity distribution may be calculated such that illuminances are uniform in an area of the projection plane onto which the projection pattern is projected.

A first design device of an illumination device according to this disclosure is a design device of an illumination device comprising:

an observation-condition setting unit that sets observation-condition information including a viewpoint position and a line-of-sight direction of an observer, and including information to be observed by the observer;

a projection-condition calculation unit that calculates, based on the observation-condition information, projection-condition information including a position in a projection plane onto which a projection pattern is projected, and a shape and a size of the projection pattern on the projection plane; and

an illumination-condition calculation unit that calculates, based on the projection-condition information and a position of an illumination device that projects the projection pattern onto the projection plane, illumination-condition information including a radiant-intensity distribution of a coherent light beam emitted from the illumination device toward the projection plane.

A second design device of an illumination device according to this disclosure is a design device of an illumination device comprising:

an observation-condition setting unit that sets observation-condition information including a viewpoint position and a line-of-sight direction of an observer, and including information to be observed by the observer;

a projection-condition calculation unit that calculates, based on the observation-condition information, projection-condition information including a position in a projection plane onto which a projection pattern is projected, and a shape and a size of the projection pattern on the projection plane; and

an illumination-condition calculation unit that calculates, based on the projection-condition information and a position of an illumination device that projects the projection pattern onto the projection plane, illumination-condition information including a luminous-intensity distribution of a coherent light beam emitted from the illumination device toward the projection plane.

In the first and second design devices of an illumination device according to this disclosure, the illumination device may be provided with a light source that emits the coherent light beam, and a diffractive optical element that diffracts the coherent light beam from the light source and projects the projection pattern, and

the design device may further comprise a diffraction-characteristic design unit that designs a diffraction characteristic of the diffractive optical element based on the illumination-condition information.

In the first and second design devices of an illumination device according to this disclosure, the diffraction-characteristic design unit may design the diffraction characteristic such that, when the projection pattern is seen from the viewpoint position in the line-of-sight direction, the projection pattern is visually recognized with a predetermined size, a predetermined shape and a predetermined inclination angle.

In the first and second design devices of an illumination device according to this disclosure, in order that, when the projection pattern is seen from the viewpoint position in the line-of-sight direction, the information is visually recognized in a plane that is not parallel to the projection plane, the observation-condition information may include information related to a direction of the not parallel plane.

In the first and second design devices of an illumination device according to this disclosure, the projection-condition calculation unit may calculate a shape and a size of the projection pattern, such that the shape and the size of the projection pattern differ depending on a distance from the viewpoint position to respective points on the projection pattern.

In the first and second design devices of an illumination device according to this disclosure, the observation-condition information may include a radiance distribution which is set such that radiances of the projection pattern are uniform, when the projection pattern is observed from the viewpoint position.

In the first and second design devices of an illumination device according to this disclosure, the observation-condition information may include a luminance distribution which is set such that luminances of the projection pattern are uniform, when the projection pattern is observed from the viewpoint position.

In the first and second design devices of an illumination device according to this disclosure, the projection-condition calculation unit may calculate an irradiance distribution in an area of the projection plane onto which the projection pattern is projected, based on the radiance distribution.

In the first and second design devices of an illumination device according to this disclosure, the projection-condition calculation unit may calculate an illuminance distribution in an area of the projection plane onto which the projection pattern is projected, based on the luminance distribution.

In the first and second design devices of an illumination device according to this disclosure, the illumination-condition calculation unit may calculate the radiant-intensity distribution based on the irradiance distribution.

In the first and second design devices of an illumination device according to this disclosure, the illumination-condition calculation unit may calculate the luminous-intensity distribution based on the illuminance distribution.

In the first and second design devices of an illumination device according to this disclosure, the illumination-condition calculation unit may calculate the radiant-intensity distribution such that irradiances are uniform in an area of the projection plane onto which the projection pattern is projected.

In the first and second design devices of an illumination device according to this disclosure, the illumination-condition calculation unit may calculate the luminous-intensity distribution such that illuminances are uniform in an area of the projection plane onto which the projection pattern is projected.

According to the present disclosure, even when a information is displayed by using a coherent light beam on a distant place, a predetermined observer can correctly recognize the information.

Brief Description of The Drawings

Fig. 1 is a perspective view schematically showing a general structure of an illumination device.

Fig. 2 is a view for explaining a design of a diffraction characteristic of a diffractive optical element in a width direction of an illuminated area.

Fig. 3 is a view for explaining a design of a diffraction characteristic of the diffractive optical element in a length direction of the illuminated area.

Fig. 4A is a view showing a first projection aspect of predetermined information in a projection pattern.

Fig. 4B is a view showing a second projection aspect of the predetermined information in the projection pattern.

Fig. 4C is a view showing a third projection aspect of the predetermined information in the projection pattern.

Fig. 4D is a view showing a fourth projection aspect of the predetermined information in the projection pattern.

Fig. 5 is a view for explaining observation ranges observed by an observer.

Fig. 6A is a view showing an example of predetermined information visually recognized in the observation range indicated by solid lines in Fig. 5.

Fig. 6B is a view showing an example of predetermined information visually recognized in the observation range indicated by broken lines in Fig. 5.

Fig. 7 is a block diagram showing a general structure of a design device for designing the illumination device according to this embodiment.

Fig. 8(a) is a view showing a rectangular projection pattern.

Fig. 8(b) is a view of a projection pattern perceived by an observer.

Fig. 9(a) is a view for explaining an angle of convergence with both eyes.

Fig. 9(b) is a view for explaining an angle of convergence with both eyes.

Fig. 10(a) is a view for explaining an angle of convergence with a single eye.

Fig. 10(b) is a view for explaining an angle of convergence with a single eye.

Fig. 11(a) is a view showing a trapezoidal projection pattern.

Fig. 11(b) is a view of a projection pattern perceived by an observer.

Figs. 12A(a) is a view for explaining trapezoidal conversion of a projection pattern.

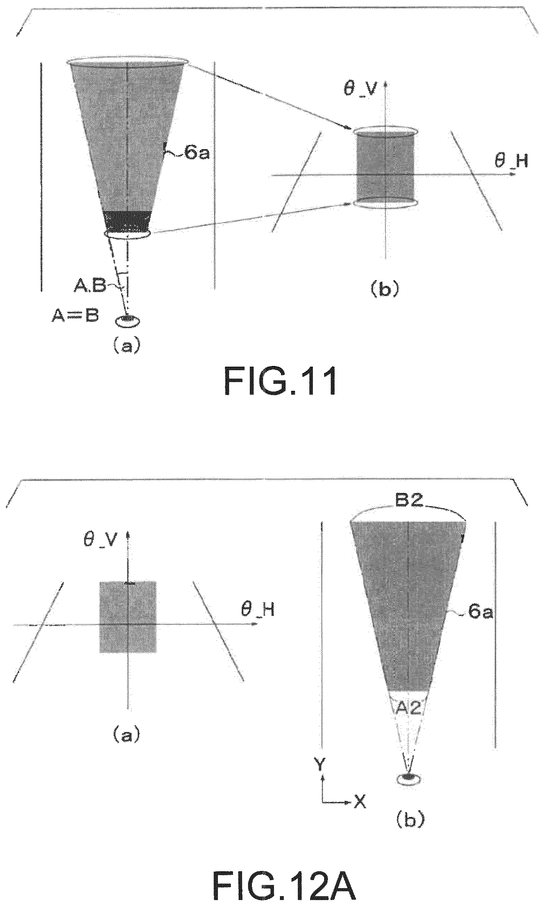

Figs. 12A(b) is a view for explaining trapezoidal conversion of the projection pattern.

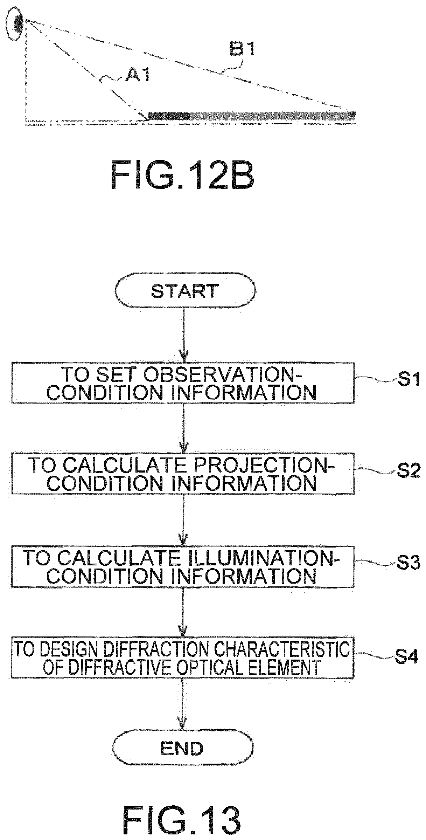

Fig. 12B is a view for explaining trapezoidal conversion of a projection pattern.

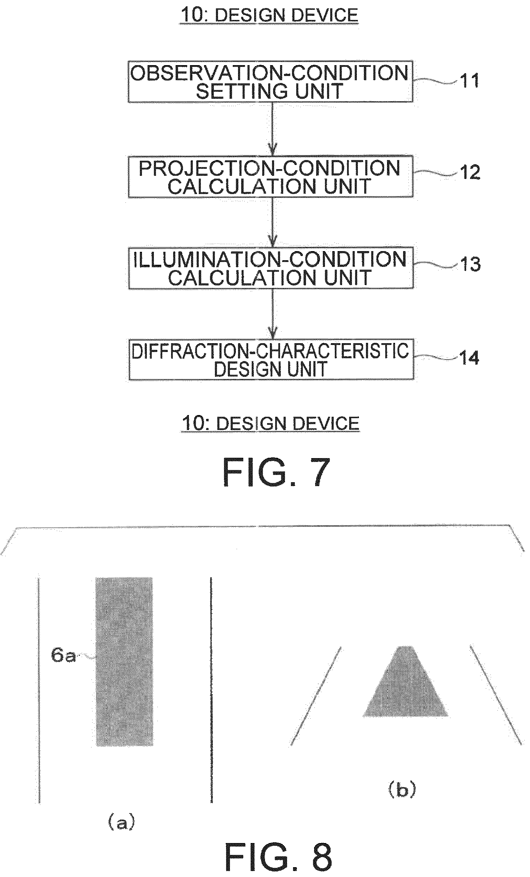

Fig. 13 is a flowchart showing an example of a process of the design device of Fig. 7.

Mode for Carrying out the Invention

An embodiment of the present disclosure is described herebelow with reference to the drawings. In the drawings attached to the specification, a scale size, an aspect ratio and so on are changed and exaggerated from the actual ones, for the convenience of easiness in illustration and understanding.

Terms specifying shapes, geometric conditions and their degrees, e.g., "parallel", "orthogonal", "same", etc. and a value of a length, an angle, etc., are not limited to their strict definitions, but are to be construed to include a range capable of exerting a similar function.

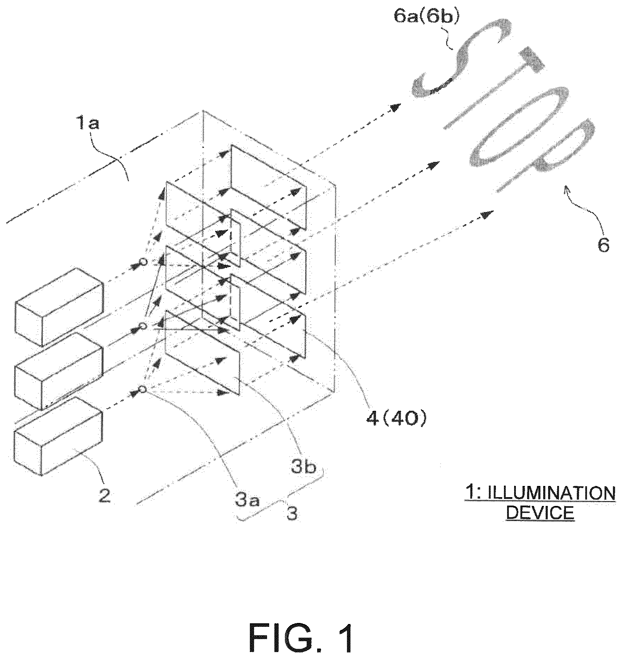

Fig. 1 is a perspective view schematically showing a general structure of an illumination device 1. The illumination device 1 according to this embodiment is used as a component of an information display lamp of an installation type, for example. However, the illumination device according to this embodiment can be applied as an illumination lamp such as a searchlight and the like. In addition, the illumination device 1 can be mounted on various moving objects, i.e., not only a vehicle such as an automobile or a bicycle, but also another moving object such as a ship, an airplane, a train, etc. Herebelow, an example in which the illumination device 1 according to this embodiment is applied to an information display lamp of an installation type is described.

As shown in Fig. 1, the illumination device 1 according to this embodiment comprises a light source 2, a shaping optical system 3, and a diffractive optical element 4. Respective components in the illumination device 1 are accommodated inside a housing 1a of a rectangular parallelepiped shape, for example.

The light source 2 is a laser light source 2 that radiates coherent light beams, i.e., laser light beams. There are various types of the laser light source 2 such as a semiconductor laser, but the laser light source 2 may be of any type. Herein, a coherent light beam is a light beam whose phase and whose frequency are uniform.

The shaping optical system 3 increases or decreases a size of coherent light beams emitted from the light source 2, and collimates them. To collimate light beams means that coherent light beams outputted from the light source 2 are made parallel. The shaping optical system 3 includes a mask or the like according to need, and has a function for regulating a projection size and so on of a laser light beam. To be more specific, the shaping optical system 3 has a first lens 3a that enlarges a beam diameter of coherent light beams outputted from the light source 2, and a second lens 3b that makes parallel light beams having passed through the first lens 3a.

The diffractive optical element 4 diffracts coherent light beams collimated by the shaping optical system 3. The diffractive optical element 4 is typically a hologram element 40. As described below, by using the hologram element 40 as the diffractive optical element 4, a diffraction characteristic can be easily designed. It is also relatively easy to design the hologram element 40 which is capable of displaying, at a predetermined position in an illuminated area 6, information of a predetermined size and a predetermined shape.

The diffractive optical element 4 may be divided into a plurality of element diffraction parts. In this case, each element diffraction part may display entire predetermined information, or may display a part of the predetermined information.

By designing the diffraction characteristic of the diffractive optical element 4 such that the respective element diffraction parts of the diffractive optical element 4 can properly illuminate respective illumination ranges in the illuminated area 6, which respectively correspond to the respective element diffraction parts, blurring of the predetermined information displayed in the illuminated area 6 can be suppressed.

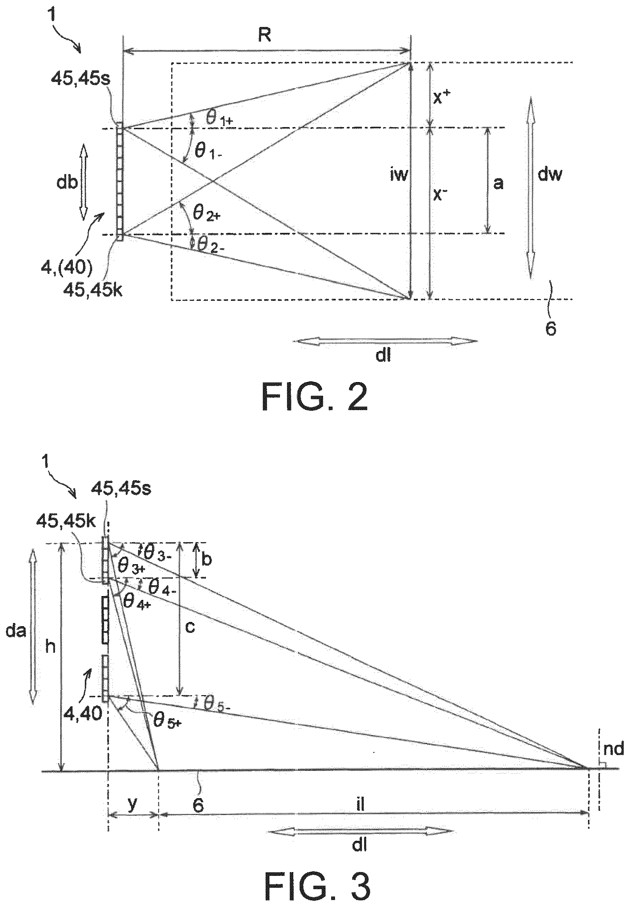

Figs. 2 and 3 show an example in which the diffractive optical element 4 is divided into a plurality of element diffraction parts 45, and a diffraction characteristic of each element diffraction part 45 is designed such that coherent light beams diffracted by each element diffraction part 45 illuminate the entire illuminated area 6. The example shown in Figs. 2 and 3 can be applied to a case in which the diffractive optical element 4 displays predetermined information in the illuminated area 6. Figs. 2 and 3 show an example in which the plurality of element diffraction parts 45 in the diffractive optical element 4 are arranged in a grid-like pattern in a first arrangement direction da and a second arrangement direction db.

As shown in Fig. 2, on the assumption that diffracted light beams from the element diffraction parts 45 that are arranged side by side in the second arrangement direction db are the same with each other because the diffraction characteristic of the element diffraction parts 45 are not particularly regulated, the diffracted light beams from the element diffraction parts 45 are applied to a surface on which the illuminated area 6 is positioned, such that they are displaced from each other in the second arrangement direction db which is an arrangement direction of the element diffraction parts 45. Figs. 2 and 3 show an example in which the respective element diffraction parts 45 illuminate the entire illuminated area 6 of a rectangular shape.

As shown in Fig. 2, the diffraction characteristics of the respective element diffraction parts 45 arranged in the second arrangement direction db are regulated such that an irradiation width iw of a diffracted light beam from one element diffraction part 45s, which is incident on a given position along a length direction dl of the illuminated area 6, the irradiation width iw being along a width direction dw orthogonal to the length direction dl, is the same as an irradiation width iw of a diffracted light beam from another element diffraction part 45k, which is incident on the given position along the length direction dl of the illuminated area 6, the irradiation width iw being along the width direction dw. The regulation of the diffraction characteristic is performed over the entire area along the length direction of the illuminated area 6. Fig. 2 is a plan view of the illuminated area 6 observed from a normal direction of the illuminated area 6, and Fig. 3 is a view observed from a normal direction of a plane extending in both of the normal direction nd of the illuminated area 6 and the length direction dl.

In the example shown in Fig. 2, the diffraction characteristic of a light beam, which moves toward a position in the illuminated area 6 that is separated from each element diffraction part 45 along the length direction dl by a distance R, is regulated in accordance with a width of the illuminated area 6. In addition, the diffraction characteristic can be regulated by using a diffusion angle distribution in an angular space. Firstly, the diffraction characteristic of the element diffraction part 45s serving as a reference is regulated. For example, in the example shown in Fig. 2, diffusion angle characteristic of the reference element diffraction part 45s, which moves toward a position separated along the length direction dl by the distance R, is specified as follows by a coordinate system shown in Fig. 2.

$$\tan(\theta_{1+}) = x^+/R$$

$$\tan(\theta_{1-}) = x^-/R$$

Next, diffusion angle characteristic of the other element diffraction part 45k is determined in consideration of the diffusion angle characteristic of the reference element diffraction part 45s, and a displacement amount a along the second arrangement direction db from the reference element diffraction part 45s to the element diffraction part 45k. To be specific, the diffusion angle characteristic of the other element diffraction part 45k is determined as follows.

$$\tan(\theta_{2+}) = (x^{+}+a)/R$$

$$\tan(\theta_{2-}) = (x^{-}-a)/R$$

The regulation of the diffusion angle characteristic of the reference element diffraction part 45s is performed over the entire area along the length direction dl of the illuminated area 6. Similarly, the regulation of the diffusion angle characteristic of the other element diffraction part 45k is performed over the entire area along the length direction dl of the illuminated area 6.

Next, as shown in Fig. 3, on the assumption that diffracted light beams from the element diffraction parts 45 that are arranged side by side in the first arrangement direction da are the same with each other because the diffraction characteristics of the element diffraction parts 45 are not particularly regulated, the diffracted light beams from the element diffraction parts 45 are applied to a surface on which the illuminated area 6 is positioned, such that they are displaced from each other both in a front direction seen from the element diffraction parts 45 and a direction perpendicular to the front direction, i.e., in the illustrated example, displaced both in the length direction dl of the illuminated area 6 and the width direction dw thereof. Thus, similarly to the regulation of the diffraction characteristics of the element diffraction parts 45 that are arranged side by side in the second arrangement direction db (Fig. 2), the diffraction characteristics of the respective element diffraction parts 45 arranged in the first arrangement direction da are regulated such that an irradiation width iw of a diffracted light beam from one element diffraction part 45s, which is incident on a given position along the length direction dl of the illuminated area 6, the irradiation width iw being along the width direction dw orthogonal to the length direction dl, is the same as an irradiation width iw of a diffracted light beam from another element diffraction part 45s, 45k, which is incident on the given position along the length direction dl of the illuminated area 6, the irradiation width iw being along the width direction dw.

Further, as shown in Fig. 3, the diffraction characteristics of the element diffraction parts 45 arranged in the first arrangement direction da are regulated such that an irradiation length il of a diffracted light beam from one element diffraction part 45s, which is incident on a given position along the width direction dw of the illuminated area 6, the irradiation length il being along the length direction dl, is the same as an irradiation length il of a diffracted light beam from another element diffraction part 45k, which is incident on the given position along the width direction dw of the illuminated area 6, the irradiation length il being along the length direction dl.

In the example shown in Fig. 3, a diffraction characteristic of a light beam, which moves from the element diffraction part 45 arranged in the first arrangement direction da, toward a given position in the width direction dw is regulated in accordance with a length of the illuminated area 6. In addition, the diffraction characteristic can be regulated by using a diffusion angle distribution in an angular space. Firstly, the diffraction characteristic of the element diffraction part 45s serving as a reference are regulated. For example, in the example shown in Fig. 3, diffusion angle characteristic of the reference element diffraction part 45s, which moves toward a given position in the width direction dw, is specified as follows by a coordinate system shown in Fig. 3.

$$\tan(\theta_{3+}) = h/y$$

$$\tan(\theta_{3-}) = h/(y+il)$$

The "h" in the expressions corresponds to a distance along the first arrangement direction da from an irradiation plane pl on which the illuminated area 6 is formed, to the reference element diffraction part 45, i.e., a height of a position at which the reference element diffraction part 45 is located.

Next, diffusion angle characteristic of the other element diffraction part 45k included in the hologram element 40 including the reference element diffraction part 45s is determined in consideration of the diffusion angle characteristic of the reference element diffraction part 45s, and a displacement amount b along the first arrangement direction da from the reference element diffraction part 45s to the element diffraction part 45k. To be specific, the diffusion angle characteristic of the other element diffraction part 45k is determined as follows.

$$\tan(\theta_{4+}) = (h-b)/y$$

$$\tan(\theta_{4-}) = (h-b)/(y+il)$$

Further, a diffraction characteristic of another element diffraction part 45k included in another hologram element 40, which is different from the hologram element 40 including the reference element diffraction part 45s, can be similarly determined. Namely, diffusion angle characteristic of the other element diffraction part 45 included in the other hologram element 40 can be determined in consideration of the diffusion angle characteristic of the reference element diffraction part 45s serving as a reference, and a displacement amount c along the first arrangement direction da from the reference element diffraction part 45s to the element diffraction part 45k. To be specific, the diffusion angle characteristic of the other element diffraction part 45 is determined as follows.

$$\tan(\theta_{5+}) = (h-c)/y$$

$$\tan(\theta_{5-}) = (h-c)/(y+il)$$

The regulation of the diffusion angle characteristic of the reference element diffraction part 45s in the longitudinal direction dl is performed over the entire area along the width direction dw of the illuminated area 6. Similarly, the regulation of the diffusion angle characteristic of the other element diffraction part 45 is performed over the entire area along the width direction dw of the illuminated area 6.

Next, the diffractive optical element 4 according to this embodiment is described. The diffractive optical element 4 has a diffraction characteristic that allow an observer who sees a projection pattern 6a on a projection plane from a predetermined viewpoint position (also referred to as a first viewpoint position) in a predetermined line-of-sight direction (also referred to as a first line-of-sight direction), to observe a pattern with a predetermined size, a predetermined shape and a predetermined inclination angle so as to visually recognize predetermined information. Namely, the diffractive optical element 4 has a diffraction characteristic that allow an observer who sees the projection pattern 6a on the projection plane from the first viewpoint position in the first line-of-sight direction, which have the position and the direction with respect to the diffractive optical element as a standard, to observe the pattern with a predetermined size, a predetermined shape and a predetermined inclination angle so as to feel the information. To put it yet another way, when the projection pattern 6a is projected onto a projection plane that is not parallel to a sheet plane of the diffractive optical element 4, a pattern having a shape and a size, which are different from the shape and the size of the projection pattern 6a on the projection plane, can be observed by an observer who sees the projection pattern from the first viewpoint position in the first line-of-sight direction. At this time, the diffractive optical element 4 not only can allow the observer to visually recognize the information on the projection plane, but also can allow the observer to visually recognize the information on a plane that is not parallel to the projection plane, in other words, the diffractive optical element 4 can allow the observer to visually recognize the information on a plane having an inclination angle with respect to the projection plane.

Namely, according to the diffraction characteristic of the diffractive optical element 4, the diffractive optical element 4 diffracts light beams such that, when an observer sees the projection pattern 6a from the first viewpoint position in the first line-of-sight direction based on the position and the direction of the diffractive optical element 4, the observer observes a pattern having a shape and a size, which are different from a shape and a size of the projection pattern 6a on the projection plane, on the projection plane or a plane having an inclination angle with respect to the projection plane, so that the observer can understand information from the pattern. For example, the shape of the projection pattern on the projection plane may be varied from the shape of the information desired to be visually recognized by the observer, depending on a distance from the observer to the projection pattern. To be more specific, the shape of the projection pattern on the projection plane may be made larger than the shape of the information desired to be visually recognized by the observer, as a distance from the viewpoint position of the observer to respective parts of the projection pattern 6a increases. To put it more specifically, a ratio of a certain part of the pattern actually observed by the observer with respect to a corresponding part of the projection pattern 6a on the projection plane may be varied depending on the position of the projection pattern 6a. More specifically, a ratio of a certain part of the pattern actually observed by the observer with respect to a corresponding part of the projection pattern 6a on the projection plane may be decreased, as a distance from the viewpoint position of the observer to the certain part of the projection pattern 6a increases. As a result, as compared with a case in which the projection pattern 6a is observed from the position of the diffractive optical element 4, the information can be visually recognized more easily from the projection pattern 6a, when the projection pattern 6a is observed from the predetermined first viewpoint position.

In this manner, since the shape and the size of the projection pattern 6a projected on the projection plane are differed from the shape and the size of the pattern to be actually observed in consideration of the position of the observer and the line-of-sight direction of the observer, the observer can visually recognize the information more exactly. Such an effect is particularly useful when an observation angle from an observer, i.e., an angle defined by a line-of-sight direction with respect to a direction normal to the projection plane is large, specifically, not less than 75° or further not less than 85°.

In addition, the diffraction characteristic of the diffractive optical element 4 allow an observer to visually recognize patterns that are different from each other at least in one of a size, a shape and an inclination angle, depending on a case in which the observer sees the projection pattern 6a from the first viewpoint position, and on a case in which the observer sees the projection pattern 6a from a second viewpoint position different from the first viewpoint position. As a result, the observer can visually recognize different information, depending on a case in which the observer sees the projection pattern 6a from the first viewpoint position, and on a case in which the observer sees the projection pattern 6a from the second viewpoint position. According to these examples, special information can be displayed to an observer from a predetermined viewpoint position.

The diffractive optical element 4 may have a diffraction characteristic that allow an observer who sees a projection pattern from the first viewpoint position in the first line-of-sight direction, to visually recognize information on a plane that is not parallel to a projection plane of the projection pattern. To be more specific, the diffractive optical element 4 may have a diffraction characteristic that allow, when an observer sees a projection pattern from the first viewpoint position in the first line-of-sight direction, that a size of the projection pattern on the projection plane differs depending on a distance from the observer to respective points on the projection pattern. Alternatively, the diffractive optical element 4 may, in embodiments falling under the scope of the claims, have a diffraction characteristic that allow, when an observer sees a projection pattern from the first viewpoint position in the first line-of-sight direction based on the position and the direction of the diffractive optical element 4, that radiances of the projection pattern are uniform at the position of the observer. Namely, when the projection pattern is observed from the first viewpoint position, the radiances of the projection pattern may be uniform. In other words, the radiances of the projection pattern in a direction connecting the first viewpoint position and respective points on the projection pattern may be uniform. In addition, the diffractive optical element 4 may have a diffraction characteristic that allow, when an observer sees a projection pattern from the first viewpoint position in the first line-of-sight direction based on the position and the direction of the diffractive optical element 4, that a size of the projection pattern on the projection plane differs depending on a distance from the observer to respective points on the projection pattern, and that radiances of the projection pattern are uniform at the position of the observer. Herein, a radiance means a light emission amount, i.e., emitted light energy per unit solid angle and unit area.

When the diffractive optical element 4 is formed of a hologram element, the aforementioned diffraction characteristic can be relatively easily designed by means of a computer by using a computer generated hologram (CGH).

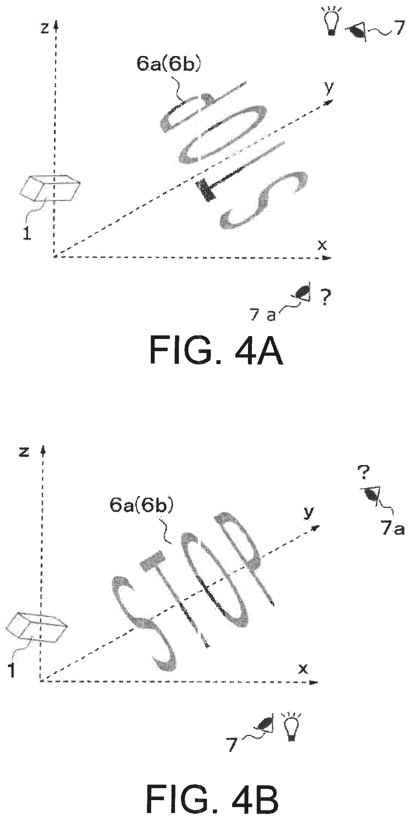

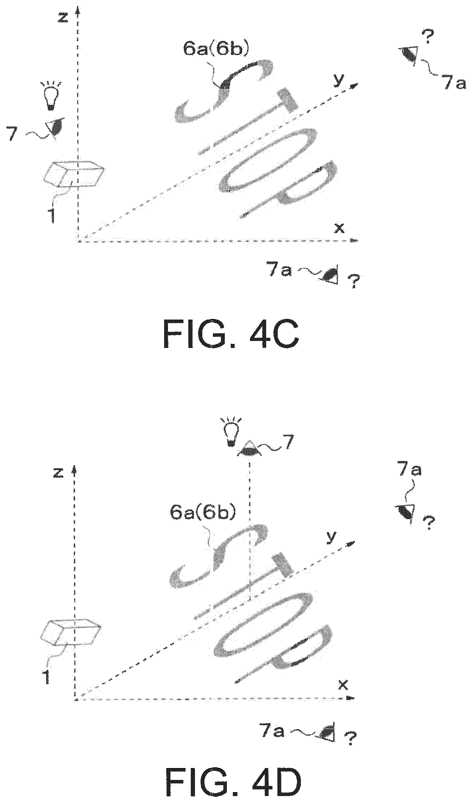

Fig. 4A is a view showing a first projection aspect of predetermined information 6b shown by the projection pattern 6a. Fig. 4B is a view showing a second projection aspect of the predetermined information 6b shown by the projection pattern 6a. Fig. 4C is a view showing a third projection aspect of the predetermined information 6b shown by the projection pattern 6a. Fig. 4D is a view showing a fourth projection aspect of the predetermined information 6b shown by the projection pattern 6a.

Figs. 4A to 4D show examples in which the projection pattern 6a including the predetermined information 6b is projected onto a road surface distant from the illumination device 1 by 50 m or more, for example. In the examples of Figs. 4A to 4D, characters of "STOP" are displayed as the predetermined information 6b on the road surface. However, information to be displayed is optional and may include a pattern, an image, a symbol, a number, etc., in addition to a character. In addition, a display color, a size, a character line type and a line width of the predetermined information 6b are optional. At least a part of the predetermined information 6b may have different colors. Since the illuminated area 6 is distant from illumination device 1, the predetermined information 6b is displayed in an extended state on the road surface.

The first projection aspect of Fig. 4A shows an example in which the illumination device 1 projects the projection pattern 6a onto the road surface, such that an observer 7 who is located oppositely to the illumination device 1 can visually recognize the predetermined information 6b. The predetermined information 6b included in the projection pattern 6a is projected such that its direction and its size are suited to a viewpoint position and a line-of-sight direction of the observer 7. Namely, the diffractive optical element 4 has a diffraction characteristic that can project the projection pattern 6a including the predetermined information 6b which has a direction and a size suited for a predetermined viewpoint position and a predetermined line-of-sight direction of the observer. When another observer 7a who is located at a position other than the viewpoint position of the observer 7, for example, when the observer 7a, who is located laterally to the displayed position of the predetermined information 6b, sees the displayed position of the projection pattern 6a, the observer 7a cannot correctly recognize the predetermined information 6b, because the predetermined information 6b included in the projection pattern 6a is projected in an extended state.

The second projection aspect of Fig. 4B shows an example in which the illumination device 1 projects the projection pattern 6a including the predetermined information 6b on a road surface, such that an observer 7 who is located laterally to the displayed position of the predetermined information 6b can correctly recognize the predetermined information 6b. Since the position of the observer 7 in Fig. 4A differs from the position of the observer 7 in Fig. 4B, the displayed direction of the predetermined information 6b is varied in accordance with the position of the observer 7.

The third projection aspect of Fig. 4C shows an example in which an observer 7 who is located near the illumination device 1 can recognize the predetermined information 6b in a light-of-sight direction along an emission direction of laser light beams from the illumination device 1. In the case of the third projection aspect, another observer 7a located oppositely to the illumination device 1, and another observer 7a located laterally to the projection pattern 6a cannot correctly recognize the predetermined information 6b.

The fourth aspect of Fig. 4D shows an example in which an observer 7 who is located above the projection position of the projection pattern 6a on the road surface can recognize the predetermined information 6b. In the case of the fourth projection aspect, another observer 7a located near the illumination device 1, and another observer 7a located near the projection pattern 6a cannot correctly recognize the predetermined information 6b.

In this manner, by regulating the diffraction characteristic of the diffractive optical element 4, how to display the predetermined information 6b included in the projection pattern 6a can be optionally regulated. Thus, by changing how to display the predetermined information 6b, a shape, a size and an inclination angle of the information seen to the observer 7 are varied.

In addition, by regulating a radiant flux of laser light beams emitted from the light source 2, an irradiance of the projection pattern 6a can be regulated. Herein, a radiant flux means a light emission amount, i.e., emitted light energy. In addition, an irradiance means a received light amount received in a unit area, i.e., received light energy per unit area. Further, by regulating traveling directions of laser light beams by means of the shaping optical system 3, blurring of the projection pattern 6a can also be suppressed.

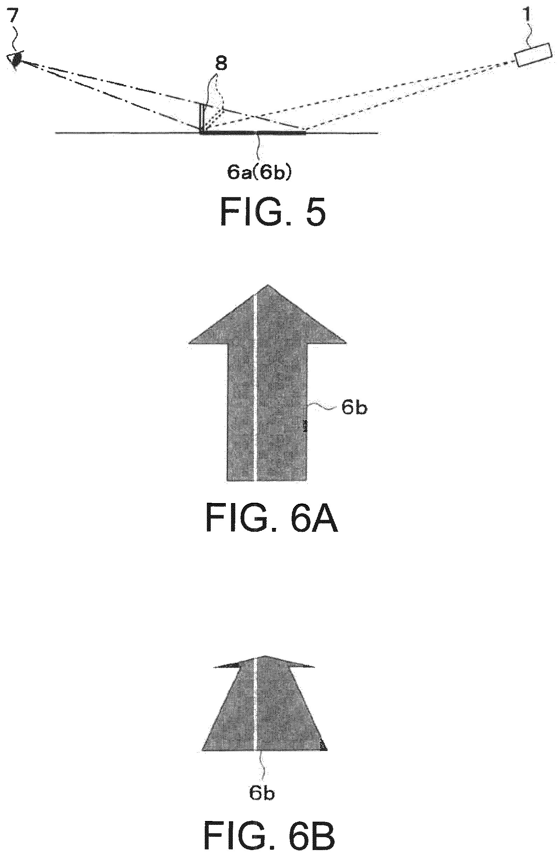

Fig. 5 is a view for describing observation ranges 8 observed by an observer 7. Figs. 6A and 6B are views showing examples of predetermined information 6b observed in the observation ranges 8.

As shown in Fig. 5, when the observer 7 sees the projection pattern 6a projected on a road surface as a projection plane, the observer 7 visually recognizes predetermined information 6b seen from the projection pattern 6a in an observation range 8. By regulating a shape and a size of the predetermined information 6b displayed by the projection pattern 6a, the observation range 8 is located in a direction near the normal direction of the road surface, which is shown by solid lines in Fig. 5, or is located in a direction near the plane direction of the road surface, which is shown by broken lines in Fig. 5.

Fig. 6A shows an example of the predetermined information 6b that tends to be visually recognized in the observation range 8 shown by the solid lines in Fig. 5, and Fig. 6B shows an example of the predetermined information 6B that tends to be visually recognized in the observation range 8 shown by the broken lines in Fig. 5. Fig. 6A and Fig. 6B show an example in which an arrow mark is displayed as the predetermined information 6b. When an observer 7 observes the projection pattern 6a in the shape shown in Fig. 6A, the predetermined information 6b is an arrow extending in the normal direction of the road surface, and the observer 7 observes the information 6b in the observation range 8 shown by the solid lines, i.e., on a plane perpendicular to the projection plane. When a pattern is desired to be simply observed by an observer 7, to display the information 6b on a plane perpendicular to the projection plane is often effective. Next, when an observer 7 observes the projection pattern 6a in the shape shown in Fig. 6B, the predetermined information 6b is observed as an arrow extending in a direction inclined to the road surface, in the observation range 8 shown by the broken lines of Fig. 5, i.e., on a plane inclined to the projection plane. By regulating a shape and a size of the projection pattern 6a to be actually projected on the road surface, the shape and the size of the projection pattern 6a observed by an observer 7 from a predetermined visual recognition position can be varied. By regulating the shape and the size of the projection pattern 6a observed from the visual recognition position, an inclination angle with respect to the projection plane of a plane on which the information 6b is to be visually recognize can be regulated. Namely, the inclination angle of the predetermined information 6b, which is seen to an observer, can be optionally regulated by regulating the shape and the size of the projection pattern 6a actually projected on the road surface.

Thus, for example, when it is desired that an observer 7, who is located on the predetermined viewpoint position and sees the projection pattern 6a in the predetermined line-of-sight direction, can observe the predetermined information 6b at the position shown by the solid lines in Fig. 5, the diffraction optical characteristic of the diffractive optical element 4 is regulated such that the information 6b having a shape shown in Fig. 6A is observed in the observation range 8. At this time, when an observer 7 sees the projection pattern from a position other than the predetermined viewpoint position, it is possible to make it difficult for the observer to visually recognize the predetermined information 6b in the shape shown in Fig. 6A. Namely, by regulating a shape and a size of the projection pattern 6a to be actually projected on the road surface, it is easy for an observer 7 who is located at a predetermined specified position to visually recognize the information on an intended plane, and it is not easy for an observer 7 who is located at a position other than the predetermined specified position to visually recognize the information on a plane other than the intended plane.

The projection pattern 6a projected on the road surface is formed by diffracted light beams from the diffractive optical element 4. Thus, by regulating the diffraction characteristic of the diffractive optical element 4, the projection pattern 6a including the predetermined information 6b having an optional shape and an optional size can be projected on the road surface. In addition, the shaping optical system 3 can regulate traveling directions of laser light beams from the light source 2, in order to suppress blurring of the projection pattern 6a.

Fig. 7 is a block diagram showing a schematic structure of a design device 10 for designing the illumination device 1 according to this embodiment. The design device 10 of Fig. 7 can be realized by a dedicated hardware equipment, or can be realized by a universal PC (Personal Computer) that executes a dedicated software. The design device 10 of Fig. 7 comprises an observation-condition setting unit 11, a projection-condition calculation unit 12, and an illumination-condition calculation unit 13.

The observation-condition setting unit 11 sets observation-condition information. The observation-condition information includes: a viewpoint position and a light-of-sight direction of an observer 7; and predetermined information 6b to be observed by the observer 7. The observation-condition information may include a radiance distribution when the observer 7 observes the predetermined information 6b. For example, the observation-condition information may include a radiance distribution which is set such that radiances of the projection pattern are uniform, when the projection pattern is observed from the viewpoint position. In other words, the observation-condition information may include a radiance distribution which is set such that radiances from respective points on the projection pattern toward the viewpoint position are uniform. In addition, the observation-condition information may include information about a plane on which information is visually recognized. In particular, when information is visually recognized on a plane different from a projection plane, it is effective that the observation-condition information includes information about a plane on which information is visually recognized. To be specific, in order that when an observer sees a projection pattern from a predetermined first viewpoint position in a predetermined first light-of-sight direction, the observer visually recognizes information on a plane that is not parallel to a projection plane of the projection pattern, the observation-condition information may include information about a direction of the not-parallel plane.

The projection-condition calculation unit 12 calculates, based on the observation-condition information, a position in a projection plane onto which a projection pattern 6a is projected, and projection-condition information including a shape and a size of the projection pattern 6a on the projection plane. The position in the projection plane onto which the projection pattern 6a is projected can be specified based on a position of the projection plane, and a viewpoint position and a light-of-sight direction of an observer 7 included in the observation-condition information. The shape and the size of the projection pattern 6a on the projection plane are calculated based on a shape and a size of the information 6b to be observed by the observer included in the observation-condition information, the viewpoint position and the light-of-sight direction included in the observation-condition information, and further information of the position in the projection plane onto which the projection pattern 6a is projected.

Further, the projection-condition information calculated by the projection-condition calculation unit 12 may include an irradiance distribution at respective positions in an area of the projection plane onto which the projection pattern 6a is projected. The projection-condition calculation unit 12 can calculate an irradiance distribution at respective positions in an area of the projection plane onto which the projection pattern 6a is projected, based on the radiance distribution included in the observation-condition information and light diffusion information of the projection plane.

The projection-condition calculation unit 12 may calculate a shape and a size of the projection pattern such that, when an observer sees a projection pattern from a first viewpoint position in a first light-of-sight direction, the shape and the size of the projection pattern differ depending on a distance from the observer to respective points on the projection pattern. In addition, the projection-condition calculation unit 12 may calculate an irradiance of the projection pattern such that, when the observer sees the projection pattern from the first viewpoint position in the first light-of-sight direction, radiances of the projection pattern are uniform at the position of the observer. Namely, the projection-condition calculation unit 12 may calculate an irradiance distribution at respective positions in the area onto which the projection pattern 6a is projected, such that radiances of the projection pattern 6a are uniform when the projection pattern 6a is observed from the viewpoint position. In addition, the projection-condition calculation unit 12 may calculate a shape and a size of the projection pattern such that the shape and the size of the projection pattern differ depending on a distance from the observer to respective points on the projection pattern, and may calculate an irradiance distribution at respective positions in the projection pattern such that radiances of the projection pattern are uniform when the projection pattern is observed at the position of the observer. When the reflection on the projection plane is perfect diffusion (Lambertian diffusion), by making uniform irradiances at respective positions in an area of the projection plane onto which the projection pattern 6a is projected, radiances of the projection pattern 6a can be made uniform when the projection pattern 6a is observed from the viewpoint position.

The illumination-condition calculation unit 13 calculates illumination-condition information based on the projection-condition information and a position of the illumination device 1 that projects the projection pattern 6a onto the projection plane. The illumination-condition information includes a radiant-intensity distribution of coherent light beams emitted from the illumination device 1 toward respective positions in the projection pattern 6a of a projection plane. The illumination-condition calculation unit 13 can calculate, based on the irradiance distribution included in the projection-condition information, a radiant-intensity distribution of coherent light beams emitted toward respective positions in the projection pattern 6a. For example, the illumination-condition calculation unit 13 may calculate a radiant-intensity distribution such that irradiances are uniform in an area of the projection plane onto which the projection pattern 6a is projected. In an embodiment falling under the scope of the claims, a radiant intensity of a coherent light beam from the illumination 15 device 1 toward a certain point of the projection pattern 6a is increased, as a distance from the illumination device to the point is longer. According to this setting, luminances at respective points in the projection pattern 6a can be effectively made uniform, irrespective of a distance from the illumination device 1.

In addition, the design device 10 of Fig. 7 may comprise a diffraction-characteristic design unit 14. The diffraction-characteristic design unit 14 designs diffraction characteristic of the diffractive optical element 4, based on an angular space coordinate from the illumination device 1 to the projection pattern 6a, which is calculated by the illumination-condition calculation unit 13, and a radiant intensity of coherent light beams emitted from the illumination device 1. To be more specific, the diffraction-characteristic design unit 14 designs diffraction characteristic such that, when an observer 7 sees the projection pattern 6a from a predetermined viewpoint position in a predetermined light-of-sight direction, the observer 7 visually recognizes the predetermined information 6b with a predetermined size, a predetermined shape and a predetermined inclination angle.

When it is desired that a projection pattern 6a is visually recognized on a plane that is not parallel to a projection plane, like the observation range 8 shown by the solid lines in Fig. 5, typically when it is desired that the projection pattern is visually recognized in the normal direction of a road surface, it is preferable that radiances of the projection pattern 6a when the projection pattern 6a is observed from the viewpoint position are uniform. When the reflection on the projection plane is perfect diffusion (Lambertian diffusion) or near the perfect diffusion, it is preferable that irradiances at respective positions in the projection pattern 6a are uniform. On the other hand, in an illumination device in which radiant intensities are almost uniform, an irradiance distribution at respective positions in the projection pattern 6a lowers at a position distant from the illumination device 1. Thus, in embodiments falling under the scope of the claims, the more distant a position in the projection pattern from the illumination device 1 is, the higher a radiant intensity of the point is. As a result, irradiances at respective positions in the projection pattern 6a are uniform. In addition, radiances of the projection pattern 6a when the projection pattern 6a is observed from the viewpoint position are uniform, when the reflection on the projection plane is perfect diffusion or near the perfect diffusion. As to the shape of the projection pattern 6a, the more distant the projection pattern 6a is located from an observer, the smaller the observer recognizes its size. Thus, it is preferable the diffraction characteristic is designed such that the more distant an illumination range from the observer is, the larger the illumination range is. Due to such a design, three-dimensional appearance or perspective appearance, which is caused by the fact that a side in the projection pattern 6a distant from the illumination device 1 is darker or that the size of the projection pattern 6a is smaller on a side distant from an observation position, can be effectively eliminated. As a result, as the observation range 8 shown by the solid lines in Fig. 5, the projection pattern 6a can be observed from the viewpoint position as if the projection pattern 6a is projected on a plane that is not parallel to the projection plane.

When a projection pattern is projected on a road surface by applying coherent light beams diagonally downward from a predetermined height above the road surface, the projection pattern is projected in a state where it is extended in a backward direction / perspective direction. When such a projection pattern is observed by an observer located in front of the projection pattern, since the observer observes the projection pattern from the viewpoint position in a diagonally downward line-of-sight direction, the projection pattern extended in the backward direction is perceived. When the projection pattern including information such as a character or a symbol is extended, there is a possibility that the observer cannot correctly perceive intended information. For example, in a case where a projection pattern includes code information such as a barcode or a QR Code (registered trademark) and the code information is automatically recognized by using a smartphone or the like, when the code information is extended and distorted, the code information may not be automatically recognized. In addition, in a case where projected information includes a licensed registered trademark (e.g., brand logo), when the registered trademark is visually recognized in a distorted state, a license problem may occur.

Thus, it is desired that a projection pattern is projected such that intended information is correctly perceived by an observer located at a specific position. In this embodiment, a projection pattern can be projected such that an observer perceives that there is information in a direction that is not parallel to a road surface.

Herebelow, a projection method in which an observer perceives that there is information in a direction that is not parallel to a road surface, as in the observation range 8 of Fig. 5, is described. As shown Fig. 8(a), suppose that a road surface is illuminated in a rectangular projection pattern which has a uniform width and a uniform length in the backward direction. Irradiances at respective positions in the projection pattern are assumed to be uniform over the entire projection pattern.

When an observer observes this projection pattern from a predetermined height above a road surface in a diagonally downward light-of-sight direction, as shown in Fig. 8(b), the projection pattern is visually recognized such that an illumination width distant from the observer is narrower.

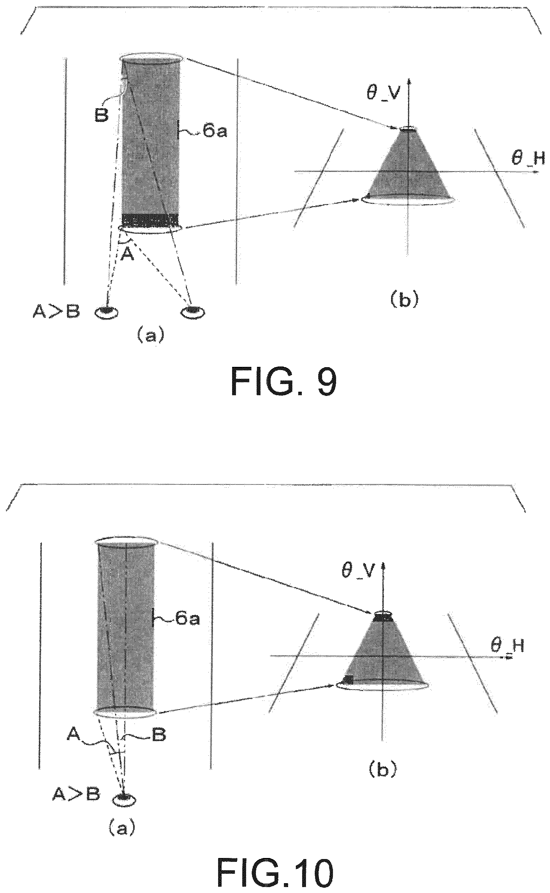

Fig. 9(a) is a view for describing an angle of convergence. The angle of convergence is an angle at which, when an observer stares at one point with both eyes, both lines of sight intersect with each other. The nearer the stared point is, the larger the angle of convergence is, as shown in an angle A in Fig. 9(a). In addition, the more distant the stared point is, the smaller the angle of convergence is, as shown in an angle B in in Fig. 9(a). In accordance with a tension degree of an oculomotor muscle when human eyes stare a stared point, perspective is perceived. As shown in Fig. 9(b), the smaller the angle of convergence is, the more distant a pattern is perceived to human eyes. When a distance from the observer to the projection pattern is long, an interpupillary distance of the observer can be neglected. In other words, perspective caused by an angle of convergence cannot be perceived, and perspective appearance is difficult to be felt.

When an observer observes a projection pattern, a size of the projection pattern visually recognized is determined by an angle of sight at which the projection pattern is observed from a viewpoint. The angle of sight is defined at an angle at which the projection pattern enlarges with respect to a viewpoint position. In accordance with an angle of sight of the projection pattern, dimensions of the projection pattern visually recognized by the observer is determined. To be specific, as shown in Fig. 10(a), suppose that a road surface as a projection plane is illuminated in a rectangular projection pattern having a uniform illumination width. In this case, the width of the projection pattern is constant irrespective of a distance from the observer. Thus, the larger angles of sight A, B of the projection pattern are, the nearer they are from the observer, while the smaller the angles of sight A, B of the projection pattern are, the more distant they are from the observer. Thus, as shown in Fig. 10(b), the projection pattern is perceived to the observer as a trapezoidal pattern having a width that gradually narrows away from the observer.

On the other hand, as shown in Fig. 11(a), suppose that a road surface is illuminated in a trapezoidal projection pattern which has an illumination width that gradually widens away from an observer. In this case, by regulating a size and a shape of the trapezoidal projection pattern, angles of sight A, B can be made substantially the same with each other between on the near side and on the distant side. Thus, as shown in Fig. 11(b), an observer perceives that the illumination width is substantially constant. When the observer perceives that the illumination width is substantially constant, it is difficult for the observer to perceive that the projection pattern has three-dimensional appearance or perspective appearance, and the observer perceives that there is information in a direction that is not parallel to the road surface, i.e., in a direction that stands up from the road surface. In addition, the longer the distance between the projection pattern and the observer is, the lower the recognition function caused by an angle of convergent becomes. Thus, it is difficult for an observer to perceive perspective appearance, and the observer perceives. Thus, the observer perceives that there is information in a standing-up direction. In the example shown in Fig. 11(a), in the projection in the normal direction of the projection plane, an angle of sight in the width direction at a given backward position of the projection pattern is constant or substantially constant, irrespective of the backward position. The angle of sight is an angle at which the projection width of the projection pattern 6a projected onto the projection plane, which is in a parallel direction in the given backward position of a parallel direction perpendicular to the backward direction, with respect to the central direction of a line of sight along which the projection pattern 6a is observed, for example, in the line-of-sight direction used in designing of the illumination device, enlarges with respect to the viewpoint position. In this case, the observer can feel that the projection pattern extends in the normal direction of the projection plane.

In this manner, the trapezoidal projection pattern is obtained by trapezoidal conversion of the rectangular projection pattern. When the trapezoidal projection pattern is projected on the road surface, three-dimensional appearance or perspective appearance of the projection pattern is eliminated, and the observer perceives that there exists information in a direction that stands up from the road surface. Namely, the distortion of the information is seemingly suppressed.

Such a trapezoidal conversion can be performed by the following simple procedure. Fig. 12A (a) is a view showing an example in which an observer visually recognizes a rectangular uniform projection pattern. Fig. 12A (b) is a view showing an example of the projection pattern 6a projected onto a projection plane, which was subjected to a trapezoidal conversion to obtain a projection pattern like Fig. 12A (a). Fig. 12B is a view showing a line-of-sight direction of the observer to the projection plane. A viewpoint of the observer is provided at a certain height from the road surface. When the projection pattern on the road surface is seen from a viewpoint, an angle of sight in a direction intersecting the line of sight (X direction in Fig. 12A (b)) is the same. Thus, by considering respective points on a border line L extending in the Y direction of the rectangular projection pattern of Fig. 12A(a), the projection pattern is subjected to a trapezoidal conversion such that a distance connecting each point and the viewpoint is identical to a distance from a position at which the viewpoint is projected on the road surface to each point after the trapezoidal conversion. Namely, as shown in Fig. 12A(b) and Fig. 12B, the trapezoidal conversion is performed such that A1 : B1 = A2 : B2, so as to generate the projection pattern like Fig. 12A (b).

In the examples shown in Figs. 11 and 12, a size of the projection pattern on the projection plane differs depending on a distance from the viewpoint position to each point on the projection pattern. To be more specific, the longer the distance from the viewpoint position to each point on the projection pattern is, the larger the size of the projection pattern on the projection plane is. On the other hand, sense of distance from the viewpoint position to each point on the projection pattern is eliminated, so that the projection pattern can be visually recognized as if information visually recognized from the projection pattern extends or stands up from the projection plane.

Another factor that is effective in eliminating three-dimensional appearance or perspective appearance when an observer sees a projection pattern on a road surface is a radiance distribution on the projection pattern. According to human brain, the more distant an object is located, the darker the object is felt. Namely, the darker an object is, the more distant the object is felt. When the entire projection pattern is illuminated at a uniform radiant intensity, the more distant a point is, the smaller its irradiance is. As a result, radiances of the projection pattern 6a when the projection pattern 6a is observed from a viewpoint position are not uniform, and a radiance in a point distant from the light source 2 is lower. Thus, it is effective that a radiant intensity of coherent light beams emitted from the light source to illuminate a distant point is increased so as to make uniform irradiances in the projection pattern 6a. In this case, an observer feels that the projection pattern 6a has uniform brightness and thus lacks three-dimensional appearance or perspective appearance. Due to this effect, it can be promoted that the projection pattern projected on a road surface is recognized as if it exists in a direction standing up from the road surface.

With a view to eliminating three-dimensional appearance or perspective appearance of the projection pattern 6a

when the projection pattern 6a is observed, a value of a ratio $((X_{max}-X_{ave})/X_{ave})$ of a difference $(=X_{max}-X_{ave})$ between a maximum value $X_{max}$ of radiances of the projection pattern 6a when the projection pattern 6a is observed from a viewpoint and an average value $X_{ave}$ of the radiances, with respect to the average value $X_{ave}$ is preferably not more than 0.4, more preferably not more than 0.3, and further preferably not more than 0.2. Similarly, with a view to eliminating three-dimensional appearance or perspective appearance of the projection pattern 6a when the projection pattern 6a is observed, a value of a ratio $((X_{ave}-X_{min})/X_{ave})$ of a difference $(=X_{ave}-X_{min})$ between an average value $X_{ave}$ of radiances of the projection pattern 6a when the projection pattern 6a is observed from a viewpoint and a minimum value $X_{min}$ of the radiances, with respect to the average value $X_{ave}$ is preferably not more than 0.4, more preferably not more than 0.3, and further preferably not more than 0.2. The minimum value $X_{min}$ of the radiances, the maximum value $X_{max}$ thereof and the average value $X_{ave}$ thereof are values that are measured by a spectral radiance meter (CS-2000A) manufactured by Konica Minolta, Inc. According to the spectral radiance meter (CS-2000A) manufactured by Konica Minolta, Inc., the minimum value $X_{min}$ of the radiances, the maximum value $X_{max}$ thereof and the average value $X_{ave}$ thereof can be measured.

With a view to eliminating three-dimensional appearance or perspective appearance of the projection pattern 6a when the projection pattern 6a is observed, a value of a ratio $((Y_{max}-Y_{ave})/Y_{ave})$ of a difference $(=Y_{max}-Y_{ave})$ between a maximum value $Y_{max}$ of irradiances at respective points on the projection pattern and an average value $Y_{ave}$ of the irradiances, with respect to the average value $Y_{ave}$ is preferably not more than 0.4, more preferably not more than 0.3, and further preferably not more than 0.2. Similarly, with a view to eliminating three-dimensional appearance or perspective appearance of the projection pattern 6a when the projection pattern 6a is observed, a value of a ratio $((Y_{ave}-Y_{min})/Y_{ave})$ of a difference $(=Y_{ave}-Y_{min})$ between an average value $Y_{ave}$ of irradiances at respective points on the projection pattern and a minimum value $Y_{min}$ of the irradiances, with respect to the average value $Y_{ave}$ is preferably not more than 0.4, more preferably not more than 0.3, and further preferably not more than 0.2. The minimum value $Y_{min}$ of the irradiances, the maximum value $Y_{max}$ thereof and the average value $Y_{ave}$ thereof are values that are measured by a spectral irradiance meter (CL-500A) manufactured by Konica Minolta, Inc. According to the spectral irradiance meter (CL-500A) manufactured by Konica Minolta, Inc., the minimum value $Y_{min}$ of the irradiances, the maximum value $Y_{max}$ thereof and the average value $Y_{ave}$ thereof can be measured.

In short, in order to allow an observer to perceive that a projection pattern illuminating a road surface exists in a direction that is not parallel to the road surface, it is preferable that an illumination width of the projection pattern is increased as it is spaced away from the observer, and it is preferable that an irradiance distribution in the projection pattern is made uniform.

Thus, it is possible to allow the observer to perceive that there is information in a direction inclined at a given angle from the road surface. For example, when the observer is allowed to perceive that there is information in the normal direction of the road surface, distortion of the information can be suppressed. For example, when the information is a character or a symbol, it is easy for the observer to understand the contents of the information by suppressing the distortion of the information.

Fig. 13 is a flowchart showing an example of a process of the design device 10. Firstly, the observation-condition setting unit 11 sets observation-condition information (step S1). The observation-condition information includes a viewpoint position and a light-of-sight direction an observer 7, and predetermined information 6b to be observed by the observer 7. The viewpoint position includes not only a two-dimensional coordinate on a road surface but also a height from the road surface. This is because, when the height of the viewpoint differs, information seen to the observer 7 differs. For example, when the viewpoint lowers, it is more likely that the predetermined information 6b in a projection pattern 6 is visually observed in an extended state. In addition, the observation-condition information may include a radiance distribution when the observer 7 observes the predetermined information 6b. For example, the observation-condition information may include a radiance distribution which is set such that radiances of the projection pattern 6a are uniform, when the projection pattern 6a is observed from the viewpoint position. Further, in order that, when the observer sees the projection pattern from a predetermined first viewpoint position in a predetermined first light-of-sight direction, the observer is allowed to visually recognize information on a plane that is not parallel to a projection plane of the projection pattern, the observation-condition information may include information related to a direction of the not-parallel plane.

Next, the projection-condition calculation unit 12 calculates projection-condition information based on the observation-condition information (step S2). The projection-condition information includes a position in the projection plane onto which the projection pattern 6a is projected, and a shape and a size of the projection pattern 6a on the projection plane. The projection-condition calculation unit 12 may calculate, based on the radiance distribution included in the observation-condition information and light diffusion information of the projection plane, an irradiance distribution at respective positions in an area of the projection plane onto which the projection pattern 6a is projected. The projection-condition calculation unit 12 may generate and handle data related to the projection plane, the position in the projection plane onto which the projection pattern 6a is projected, the viewpoint position and so on.

When a projection pattern that allows an observer to perceive that information exists in a direction that is not parallel to the projection plane, as described above, the trapezoidal conversion process of the projection pattern is performed in the step 2. A shape of the projection pattern after the trapezoidal conversion differs depending on a direction inclined at an angle from the projection plane along which the observer is desired to perceive that information exists.

Next, the illumination-condition calculation unit 13 calculates illumination-condition information based on the projection-condition information and a position of the illumination device that projects the projection pattern 6a onto the projection plane The illumination-condition information includes a radiant-intensity distribution of coherent light beams emitted from the illumination device 1 toward respective positions in the projection pattern 6a of a projection plane (step S3). As described above, by regulating a shape and a size of the predetermined information 6b included in the projection pattern 6a, a shape, a size and an inclination angle of the information seen to the observer 7 can be optionally regulated. When a projection pattern that allows an observer to perceive that information exists in a direction that is not parallel to a projection plane, as described above, it is effective that a radiant intensity of coherent light beams which illuminate a distant place from the light source 2 is increased so as to regulate an irradiance of the projection pattern. To be more specific, it is preferable that an irradiance distribution at respective points in the projection pattern 6a are made uniform.

Next, the diffraction-characteristic design unit 14 designs, based on the illumination-condition information calculated by the illumination-condition calculation unit 13, a diffraction characteristic of the diffractive optical element 4 (step S4). Before or after the step S4, optical characteristics of the shaping optical system 3 may be designed in order to suppress blurring of the projection pattern 6a.

As described above, the illumination device 1 according to this embodiment can be used as an information display lamp of an installation type which displays various vehicle traffic information. In addition, the illumination device 1 according to this embodiment can be installed on a road shoulder of a road on which a vehicle drives, so as to provide various information with a vehicle driving the road. For example, when a tunnel has a traffic accident such as flood, information informing the traffic accident may be displayed on a road surface from the illumination device 1 located on a road shoulder in front of the tunnel. Namely, the illumination device 1 according to this embodiment may be incorporated, not only in a moving object such as a vehicle, a ship, a train, etc., but also in an infrastructure equipment provided on a predetermined location.

As described above, in this embodiment, the diffraction characteristic of the diffractive optical element 4 are regulated such that, when a predetermined observer 7 sees the projection pattern 6a from a viewpoint position, the observer 7 can correctly recognize the predetermined information 6b included in the projection pattern 6a. Thus, even when the projection pattern 6a is provided distant from the illumination device 1 so that the predetermined information 6b is displayed in an extended state, information that can be easily recognized visually by the predetermined observer 7 can be provided. Particularly in this embodiment, a shape and an irradiance of the projection pattern are regulated such that, when the observer observes the projection pattern projected on a road surface from diagonally above, the observer can perceive the information in a direction that is not parallel to the road surface. This regulation is performed by the regulation of the diffraction characteristic of the diffractive optical element 4. Thus, according to this embodiment, an observer can be allowed to perceive that there is information in a direction inclined at a given angle from a projection plane. Particularly according to this embodiment, since the observer can be allowed to perceive that there is information in the normal direction of the projection plane, the information, which is less distorted, can be perceived by the observer. Thus, the observer can recognize the contents of the information formed of a character, a symbol, an image or the like, without misunderstanding.

Particularly according to this embodiment, an orientation of light beams, e.g., a radiant-intensity distribution in an angular space is regulated by using the diffractive optical element 4. Thus, even a distant illuminated area can be illuminated with a high degree of accuracy, and a contour of a projection pattern can be made sharp.

An aspect of the present disclosure is not limited to the aforementioned embodiments, but includes various modifications that can be conceived by those skilled in the art. An effect of the present disclosure is not limited to the aforementioned contents. That is to say, the present disclosure can be variously added, changed or partly deleted within a range not departing from the purport of the present disclosure introduced from the contents specified in the claims.

For example, as a specific example of the aforementioned embodiment, an example in which a radiance, an irradiance and a radiant intensity are regulated is described. However, not limited to this example, a luminance may be regulated in place of a radiance, an illuminance may be regulated in place of an irradiance, and a luminous intensity may be regulated in place of a radiant intensity.

For example, the diffractive optical element 4 may have a diffraction characteristic that allow luminances of the projection pattern 6a to be uniform, when the projection pattern 6a is observed from a viewpoint position. In addition, the observation-condition information may include a luminance distribution which is set such that luminances of the projection pattern 6a are uniform, when the projection pattern 6a is observed from a viewpoint position. The projection-condition calculation unit 12 may calculate, based on the luminance distribution of the observation-condition information, an illuminance distribution of an area in a projection plane onto which the projection pattern is projected. The illumination-condition calculation unit 13 may calculate, based on the illuminance distribution included in the projection-condition information, a luminous-intensity distribution of coherent light beams emitted from the illumination device 1. In particular, the illumination-condition calculation unit 13 may calculate an luminous intensity distribution of coherent light beams emitted from the illumination device 1, such that illuminances of the projection pattern 6a are uniform in an area of the projection plane onto which the projection pattern 6a is projected.

With a view to eliminating three-dimensional appearance or perspective appearance of the projection pattern 6a when the projection pattern 6a is observed, a value of a ratio $((Z_{max}-Z_{ave})/Z_{ave})$ of a difference $(=Z_{max}-Z_{ave})$ between a maximum value $Z_{max}$ of luminances of the projection pattern 6a when the projection pattern 6a is observed from a viewpoint and an average value $Z_{ave}$ of the luminances, with respect to the average value $Z_{ave}$ is preferably not more than 0.4, more preferably not more than 0.3, and further preferably not more than 0.2. Similarly, with a view to eliminating three-dimensional appearance or perspective appearance of the projection pattern 6a when the projection pattern 6a is observed, a value of a ratio $((Z_{ave}-Z_{min})/Z_{ave})$ of a difference $(=Z_{ave}-Z_{min})$ between an average value $Z_{ave}$ of luminances of the projection pattern 6a when the projection pattern 6a is observed from a viewpoint and a minimum value $Z_{min}$ of the luminances, with respect to the average value $Z_{ave}$ is preferably not more than 0.4, more preferably not more than 0.3, and further preferably not more than 0.2. The minimum value $Z_{min}$ of the luminances, the maximum value $Z_{max}$ thereof and the average value $Z_{ave}$ thereof are values that are measured by a spectral radiance meter (CS-2000A) manufactured by Konica Minolta, Inc. According to the spectral radiance meter (CS-2000A) manufactured by Konica Minolta, Inc., the minimum value $Z_{min}$ of the luminances, the maximum value $Z_{max}$ thereof and the average value $Z_{ave}$ thereof can be measured.

With a view to eliminating three-dimensional appearance or perspective appearance of the projection pattern 6a when the projection pattern 6a is observed, a value of a ratio $((W_{max}-W_{ave})/W_{ave})$ of a difference $(=W_{max}-W_{ave})$ between a maximum value $W_{max}$ of illuminances at respective points on the projection pattern 6a and an average value $W_{ave}$ of the illuminances, with respect to the average value $W_{ave}$ is preferably not more than 0.4, more preferably not more than 0.3, and further preferably not more than 0.2. Similarly, with a view to eliminating three-dimensional appearance or perspective appearance of the projection pattern 6a when the projection pattern 6a is observed, a value of a ratio $((W_{ave}-W_{min})/W_{ave})$ of a difference $(=W_{ave}-W_{min})$ between an average value $W_{ave}$ of illuminances at respective points on the projection pattern 6a and a minimum value $W_{min}$ of the illuminances, with respect to the average value $W_{ave}$ is preferably not more than 0.4, more preferably not more than 0.3, and further preferably not more than 0.2. The minimum value $W_{min}$ of the illuminances, the maximum value $W_{max}$ thereof and the average value $W_{ave}$ thereof are values that are measured by a spectral irradiance meter (CL-500A) manufactured by Konica Minolta, Inc. According to the spectral irradiance meter (CL-500A) manufactured by Konica Minolta, Inc., the minimum value $W_{min}$ of the illuminances, the maximum value $W_{max}$ thereof and the average value $W_{ave}$ thereof can be measured.

Description of Reference numerals

1      Illumination device
1a     Housing
2      Light source
3      Shaping optical system
4      Diffractive optical element
6      Illuminated area
6a     Projection pattern
6b     Predetermined information
7      Observer
8      Observation range
10     Design device
11     Observation-condition setting unit
12     Projection-condition calculation unit
13     Illumination-condition calculation unit
14     Diffraction-Characteristic design unit

**Claims**

1.  An illumination device (1) that projects a projection pattern (6a) including information onto a projection plane, comprising:

    a light source (2) that emits a coherent light beam; and
    a diffractive optical element (4) that diffracts the coherent light beam from the light source (2) and projects the projection pattern (6a) by having diffracted light enter an illuminated area (6) on the projection plane;

**characterized in that** the diffractive optical element (4) has a diffraction characteristic that allows an observer who sees the projection pattern (6a) from a viewpoint position, to visually recognize the information displayed as extending out from the projection plane on a plane that is non-parallel to the projection plane and that is stand up from the projection plane and

wherein a radiant intensity of a coherent light beam from the illumination device (1) toward a certain point of the projection pattern (6a) is increased, as a distance from the illumination device (1) to the point is longer.

2. The illumination device (1) according to claim 1, wherein the diffractive optical element (4) has the diffraction characteristic that allow a size of the projection pattern (6a) on the projection plane to differ depending on a distance from the viewpoint position to respective points on the projection pattern (6a).

3. The illumination device (1) according to claim 1 or 2, wherein a ratio of a certain part of the information actually observed by the observer with respect to a corresponding part of the projection pattern (6a) on the projection plane is decreased, as a distance from the viewpoint position of the observer to the certain part of the projection pattern (6a) increases.

4. The illumination device (1) according to any one of claims 1 to 3, wherein the diffractive optical element (4) has the diffraction characteristic that allow radiances of the projection pattern (6a) to be uniform, when the projection pattern is observed from the viewpoint position.

5. The illumination device (1) according to any one of claims 1 to 4, wherein a minimum value $X_{min}$ of radiances of the projection pattern (6a) when the projection pattern (6a) is observed from the viewpoint position, a maximum value $X_{max}$ of the radiances, and an average value $X_{ave}$ of the radiances satisfy following two expressions (1) and (2):

$$(X_{max}\text{-}X_{ave})/X_{ave} \leq 0.4 \quad \dots \text{ expression (1)}$$

and

$$(X_{ave}\text{-}X_{min})/X_{ave} \leq 0.4 \quad \dots \text{ expression (2)}.$$

6. The illumination device (1) according to any one of claims 1 to 5, wherein a minimum value $Y_{min}$ of irradiances at respective points on the projection pattern (6a), a maximum value $Y_{max}$ of the irradiances, and an average value $Y_{ave}$ of the irradiances satisfy following two expressions (3) and (4):

$$(Y_{max}\text{-}Y_{ave})/Y_{ave} \leq 0.4 \quad \dots \text{ expression (3)}$$

and

$$(Y_{ave}\text{-}Y_{min})/Y_{ave} \leq 0.4 \quad \dots \text{ expression (4)}.$$

7. The illumination device (1) according to any one of claims 1 to 6, comprising a shaping optical system (3) that collimates the coherent light beam emitted from the light source (2), wherein the diffractive optical element (4) diffracts the coherent light beam collimated by the shaping optical system (3) and projects the projection pattern (6a).

8. The illumination device (1) according to claim 7, wherein the shaping optical system (3) regulates a traveling direction of the coherent light beam emitted from the light source (2) so as to suppress blurring of the projection pattern (6a).

9. A computer-implemented design method of an illumination device (1) comprising:

a step of setting observation-condition information including a viewpoint position and a line-of-sight direction of an observer, and including information to be observed by the observer;
a step of calculating, based on the observation-condition information, projection-condition information including a position in a projection plane onto which a projection pattern (6a) is projected, and a shape and a size of the projection pattern (6a) on the projection plane; and

a step of calculating, based on the projection-condition information and a position of an illumination device (1) that projects the projection pattern (6a) onto the projection plane, illumination-condition information including a radiant-intensity distribution of a coherent light beam emitted from the illumination device (1) toward the projection plane,

wherein, in the radiant-intensity distribution, a radiant intensity of a coherent light beam from the illumination device (1) toward a certain point of the projection pattern is increased, as a distance from the illumination device (1) to the point is longer,

so that the information to be observed by the observer is visually recognizable as extending out from the projection plane on a plane that is non-parallel to the projection plane and that is stand up from the projection plane when seeing the projection pattern (6a) from the viewpoint position, and

the illumination device (1) is provided with a light source (2) that emits the coherent light beam, and a diffractive optical element (4) that diffracts the coherent light beam from the light source (2) and projects the projection pattern (6a) by having diffracted light enter an illuminated area (6) on the projection plane, and

the design method further comprises a step of designing a diffraction characteristic of the diffractive optical element (4) based on the illumination-condition information,

wherein the method further comprises the step of regulating the diffraction characteristic of the diffractive optical element (4) in accordance with said designed diffraction characteristic.

10. The design method according to claim 9, wherein
the diffraction characteristic is designed such that, when the projection pattern (6a) is seen from the viewpoint position in the line-of-sight direction, the information determined by the observation-condition information is visually recognized.

11. The design method according to claim 9 or claim 10, wherein
in order that, when the projection pattern is seen from the viewpoint position in the line-of-sight direction, the information is visually recognized in a plane that is non-parallel to the projection plane, the observation-condition information includes information related to a direction of the non-parallel plane.

12. The design method according to any one of claims 9 to 11, wherein
the step of calculating the projection-condition information calculates a shape and a size of the projection pattern (6a), such that the shape and the size of the projection pattern (6a) differ depending on a distance from the viewpoint position to respective points on the projection pattern (6a).

13. The design method according to any one of claims 9 to 12, wherein
the observation-condition information includes a radiance distribution which is set such that radiances of the projection pattern (6a) are uniform, when the projection pattern (6a) is observed from the viewpoint position.


**Patentansprüche**

1. Beleuchtungsvorrichtung (1), die ein Projektionsmuster (6a) mit Informationen auf eine Projektionsebene projiziert, umfassend:

eine Lichtquelle (2), die einen kohärenten Lichtstrahl emittiert; und
ein optisches Beugungselement (4), das den kohärenten Lichtstrahl von der Lichtquelle (2) beugt und das Projektionsmuster (6a) projiziert, indem gebeugtes Licht in einen beleuchteten Bereich (6) auf der Projektionsebene eintritt;
**dadurch gekennzeichnet, dass** das optische Beugungselement (4) eine Beugungscharakteristik aufweist, die es einem Betrachter, der das Projektionsmuster (6a) von einer Blickpunktposition aus sieht, ermöglicht, die angezeigten Informationen visuell so zu erkennen, als ob sie sich von der Projektionsebene auf einer Ebene herauserstrecken würden, die nicht parallel zu der Projektionsebene ist und die von der Projektionsebene nach oben steht, und
wobei eine Strahlungsintensität eines kohärenten Lichtstrahls von der Beleuchtungsvorrichtung (1) zu einem bestimmten Punkt des Projektionsmusters (6a) in dem Maße zunimmt, wie ein Abstand von der Beleuchtungsvorrichtung (1) zu dem Punkt länger ist.

**2.** Beleuchtungsvorrichtung (1) nach Anspruch 1, wobei
das optische Beugungselement (4) die Beugungscharakteristik aufweist, die einen Größenunterschied des Projektionsmusters (6a) auf der Projektionsebene in Abhängigkeit von einem Abstand von der Blickpunktposition zu jeweiligen Punkten auf dem Projektionsmuster (6a) ermöglicht.

**3.** Beleuchtungsvorrichtung (1) nach Anspruch 1 oder 2, wobei
ein Verhältnis eines von dem Betrachter tatsächlich betrachteten Teils der Informationen in Bezug auf einen entsprechenden Teil des Projektionsmusters (6a) auf der Projektionsebene in dem Maße abnimmt, wie ein Abstand von der Blickpunktposition des Betrachters zu dem bestimmten Teil des Projektionsmusters (6a) zunimmt.

**4.** Beleuchtungsvorrichtung (1) nach einem der Ansprüche 1 bis 3, wobei
das optische Beugungselement (4) die Beugungscharakteristik aufweist, die gleichmäßige Strahldichten des Projektionsmusters (6a) ermöglicht, wenn das Projektionsmuster von der Blickpunktposition aus betrachtet wird.

**5.** Beleuchtungsvorrichtung (1) nach einem der Ansprüche 1 bis 4,
wobei ein minimaler Wert $X_{min}$ von Strahldichten des Projektionsmusters (6a), wenn das Projektionsmuster (6a) von der Blickpunktposition aus betrachtet wird, ein maximaler Wert $X_{max}$ der Strahldichten und ein Mittelwert $X_{ave}$ der Strahldichten folgende zwei Gleichungen (1) und (2) erfüllen:

$$(X_{max}-X_{ave})/X_{ave} \leq 0{,}4 \qquad \ldots \text{ Gleichung (1)}$$

und

$$(X_{ave}-X_{min})/X_{ave} \leq 0{,}4 \qquad \ldots \text{ Gleichung (2)}.$$

**6.** Beleuchtungsvorrichtung (1) nach einem der Ansprüche 1 bis 5,
wobei ein minimaler Wert $Y_{min}$ von Bestrahlungsstärken an jeweiligen Punkten auf dem Projektionsmuster (6a), ein maximaler Wert $Y_{max}$ der Bestrahlungsstärken und ein Mittelwert $Y_{ave}$ der Bestrahlungsstärken folgende zwei Gleichungen (3) und (4) erfüllen:

$$(Y_{max}-Y_{ave})/Y_{ave} \leq 0{,}4 \qquad \ldots \text{ Gleichung (3)}$$

und

$$(Y_{ave}-Y_{min})/Y_{ave} \leq 0{,}4 \qquad \ldots \text{ Gleichung (4)}.$$

**7.** Beleuchtungsvorrichtung (1) nach einem der Ansprüche 1 bis 6, umfassend ein optisches Formungssystem (3), das den von der Lichtquelle (2) emittierten kohärenten Lichtstrahl kollimiert,
wobei das optische Beugungselement (4) den von dem optischen Formungssystem (3) kollimierten kohärenten Lichtstrahl beugt und das Projektionsmuster (6a) projiziert.

**8.** Beleuchtungsvorrichtung (1) nach Anspruch 7, wobei
das optische Formungssystem (3) eine Ausbreitungsrichtung des von der Lichtquelle (2) emittierten kohärenten Lichtstrahls reguliert, um eine Unschärfe des Projektionsmusters (6a) zu unterbinden.

**9.** Computerimplementiertes Designverfahren einer Beleuchtungsvorrichtung (1) umfassend:

einen Schritt des Festlegens von Betrachtungsbedingungsinformationen, einschließlich einer Blickpunktposition und einer Blickrichtung eines Betrachters, und einschließlich von Informationen, die von dem Betrachter zu betrachten sind;
einen Schritt des Berechnens, basierend auf den Betrachtungsbedingungsinformationen, von Projektionsbedingungsinformationen, einschließlich einer Position in einer Projektionsebene, auf die ein Projektionsmuster (6a) projiziert wird, und einer Form und einer Größe des Projektionsmusters (6a) auf der Projektionsebene;
einen Schritt des Berechnens, basierend auf den Projektionsbedingungsinformationen und einer Position einer Beleuchtungsvorrichtung (1), die das Projektionsmuster (6a) auf die Projektionsebene projiziert, von Beleuchtungsbedingungsinformationen, einschließlich einer Strahlungsintensitätsverteilung eines kohärenten Lichtstrahls, der von der Beleuchtungsvorrichtung (1) in Richtung der Projektionsebene emittiert wird;

wobei bei der Strahlungsintensitätsverteilung eine Strahlungsintensität eines kohärenten Lichtstrahls von der Beleuchtungsvorrichtung (1) in Richtung eines bestimmten Punkts des Projektionsmusters in dem Maße erhöht wird, wie ein Abstand von der Beleuchtungsvorrichtung (1) zu dem Punkt länger wird,

so dass die von dem Betrachter zu betrachtenden Informationen visuell so erkennbar sind, als ob sie sich von der Projektionsebene auf einer Ebene herauserstrecken würden, die nicht parallel zu der Projektionsebene ist und die von der Projektionsebene nach oben steht, wenn das Projektionsmuster (6a) von der Blickpunktposition aus gesehen wird, und

die Beleuchtungsvorrichtung (1) mit einer Lichtquelle (2), die den kohärenten Lichtstrahl emittiert, und einem optischen Beugungselement (4) versehen ist, das den kohärenten Lichtstrahl von der Lichtquelle (2) beugt und das Projektionsmuster (6a) projiziert, indem gebeugtes Licht in einen beleuchteten Bereich (6) auf der Projektionsebene eintritt;

wobei das Designverfahren ferner einen Schritt des Designens einer Beugungscharakteristik des optischen Beugungselements (4) basierend auf den Beleuchtungsbedingungsinformationen umfasst,

wobei das Verfahren ferner den Schritt des Regulierens der Beugungscharakteristik des optischen Beugungselements (4) gemäß der designten Beugungscharakteristik umfasst.

10. Designverfahren nach Anspruch 9, wobei
die Beugungscharakteristik so designt wird, dass, wenn das Projektionsmuster (6a) von der Blickpunktposition in der Blickrichtung gesehen wird, die durch die Betrachtungsbedingungsinformationen bestimmten Informationen visuell erkannt werden.

11. Designverfahren nach Anspruch 9 oder 10, wobei
damit, wenn das Projektionsmuster von der Blickpunktposition in der Blickrichtung gesehen wird, die Informationen in einer Ebene, die nicht parallel zu der Projektionsebene ist, visuell erkannt werden, die Betrachtungsbedingungsinformationen Informationen enthalten, die sich auf eine Richtung der nicht parallelen Ebene beziehen.

12. Designverfahren nach einem der Ansprüche 9 bis 11, wobei
der Schritt des Berechnens der Projektionsbedingungsinformationen eine Form und eine Größe des Projektionsmusters (6a) berechnet, so dass sich die Form und die Größe des Projektionsmusters (6a) in Abhängigkeit von einem Abstand von der Blickpunktposition zu jeweiligen Punkten auf dem Projektionsmuster (6a) unterscheiden.

13. Designverfahren nach einem der Ansprüche 9 bis 12, wobei
die Betrachtungsbedingungsinformationen eine Strahldichtenverteilung beinhalten, die so festgelegt wird, dass die Strahldichten des Projektionsmusters (6a) gleichmäßig sind, wenn das Projektionsmuster (6a) von der Blickpunktposition aus betrachtet wird.

**Revendications**

1. Dispositif d'éclairage (1) qui projette un motif de projection (6a) comprenant des informations sur un plan de projection, comprenant :

une source lumineuse (2) qui émet un faisceau lumineux cohérent; et
un élément optique diffractif (4) qui diffracte le faisceau lumineux cohérent provenant de la source lumineuse (2) et projette le motif de projection (6a) en faisant entrer la lumière diffractée dans une zone éclairée (6) sur le plan de projection ;
**caractérisé en ce que** l'élément optique diffractif (4) a une caractéristique de diffraction qui permet à un observateur qui voit le motif de projection (6a) depuis une position de point de vue, de reconnaître visuellement les informations affichées comme s'étendant depuis le plan de projection sur un plan qui n'est pas parallèle au plan de projection et qui est surélevé par rapport au plan de projection, et
dans lequel l'intensité radiante d'un faisceau lumineux cohérent provenant du dispositif d'éclairage (1) vers un point donné du motif de projection (6a) est augmentée à mesure qu'augmente une distance entre le dispositif d'éclairage (1) et le point.

2. Dispositif d'éclairage (1) selon la revendication 1, dans lequel
l'élément optique diffractif (4) présente la caractéristique de diffraction qui permet à une taille du motif de projection (6a) sur le plan de projection de varier en fonction d'une distance entre la position de point de vue et des points respectifs sur le motif de projection (6a).

**3.** Dispositif d'éclairage (1) selon la revendication 1 ou 2, dans lequel
un rapport entre une partie donnée des informations réellement observées par l'observateur et une partie correspondante du motif de projection (6a) sur le plan de projection est diminué à mesure qu'augmente une distance entre la position de point de vue de l'observateur et la partie donnée du motif de projection (6a).

**4.** Dispositif d'éclairage (1) selon l'une quelconque des revendications 1 à 3, dans lequel
l'élément optique diffractif (4) présente la caractéristique de diffraction qui permet d'uniformiser les radiances du motif de projection (6a), lorsque le motif de projection est observé depuis la position de point de vue.

**5.** Dispositif d'éclairage (1) selon l'une quelconque des revendications 1 à 4, dans lequel une valeur minimale $X_{min}$ des radiances du motif de projection (6a) lorsque le motif de projection (6a) est observé depuis la position de point de vue, une valeur maximale $X_{max}$ des radiances, et une valeur moyenne $X_{ave}$ des radiances satisfont les deux expressions (1) et (2) ci-dessous :

$$(X_{max}-X_{ave})/X_{ave} \leq 0,4 \dots \text{expression (1)}$$

et

$$(X_{ave}-X_{min})/X_{ave} \leq 0,4 \dots \text{expression (2)}.$$

**6.** Dispositif d'éclairage (1) selon l'une quelconque des revendications 1 à 5, dans lequel une valeur minimale $Y_{min}$ des irradiances en des points respectifs sur le motif de projection (6a), une valeur maximale $Y_{max}$ des irradiances, et une valeur moyenne $Y_{ave}$ des irradiances satisfont les deux expressions (3) et (4) ci-dessous :

$$(Y_{max}-Y_{ave})/Y_{ave} \leq 0,4 \dots \text{expression (3)}$$

et

$$(Y_{ave}-Y_{min})/Y_{ave} \leq 0,4 \dots \text{expression (4)}.$$

**7.** Dispositif d'éclairage (1) selon l'une quelconque des revendications 1 à 6, comprenant un système optique de mise en forme (3) qui collimate le faisceau lumineux cohérent émis par la source lumineuse (2),
dans lequel l'élément optique diffractif (4) diffracte le faisceau lumineux cohérent collimaté par le système optique de mise en forme (3) et projette le motif de projection (6a).

**8.** Dispositif d'éclairage (1) selon la revendication 7, dans lequel
le système optique de mise en forme (3) régule une direction de propagation du faisceau lumineux cohérent émis par la source lumineuse (2) de manière à supprimer le flou du motif de projection (6a).

**9.** Procédé de conception, mis en œuvre par ordinateur, d'un dispositif d'éclairage (1) comprenant :

une étape consistant à définir des informations de conditions d'observation, incluant une position de point de vue et une direction de ligne de visée d'un observateur, et incluant des informations à observer par l'observateur ;
une étape consistant à calculer, sur la base des informations de conditions d'observation, des informations de conditions de projection incluant une position dans un plan de projection sur lequel un motif de projection (6a) est projeté, et une forme et une taille du motif de projection (6a) sur le plan de projection ; et
une étape consistant à calculer, sur la base des informations de conditions de projection et d'une position d'un dispositif d'éclairage (1) qui projette le motif de projection (6a) sur le plan de projection, des informations de conditions d'éclairage incluant une répartition d'intensité radiante d'un faisceau lumineux cohérent émis par le dispositif d'éclairage (1) vers le plan de projection,
dans lequel, dans la répartition d'intensité radiante, l'intensité radiante d'un faisceau lumineux cohérent provenant du dispositif d'éclairage (1) vers un point donné du motif de projection est augmentée à mesure qu'augmente une distance entre le dispositif d'éclairage (1) et le point,
de sorte que les informations à observer par l'observateur sont visuellement reconnaissables comme s'étendant à partir du plan de projection sur un plan qui n'est pas parallèle au plan de projection et qui est surélevé par rapport au plan de projection lorsque le motif de projection (6a) est vu depuis la position de point de vue, et
le dispositif d'éclairage (1) est muni d'une source lumineuse (2) qui émet le faisceau lumineux cohérent, et d'un élément optique diffractif (4) qui diffracte le faisceau lumineux cohérent provenant de la source lumineuse (2) et projette le motif de projection (6a) en faisant entrer la lumière diffractée dans une zone éclairée (6) sur le plan de projection, et
le procédé de conception comprend en outre une étape consistant à concevoir une caractéristique de diffraction de l'élément optique diffractif (4) sur la base des informations de conditions d'éclairage,
dans lequel le procédé comprend en outre l'étape consistant à réguler la caractéristique de diffraction de l'élément optique diffractif (4) conformément à ladite caractéristique de diffraction conçue.

10. Procédé de conception selon la revendication 9, dans lequel
la caractéristique de diffraction est conçue de sorte que, lorsque le motif de projection (6a) est vu depuis la position de point de vue dans la direction de ligne de visée, les informations déterminées par les informations de conditions d'observation sont reconnues visuellement.

11. Procédé de conception selon la revendication 9 ou 10, dans lequel
afin que, lorsque le motif de projection est vu depuis la position de point de vue dans la direction de ligne de visée, les informations soient reconnues visuellement dans un plan qui n'est pas parallèle au plan de projection, les informations de conditions d'observation incluent des informations relatives à une direction du plan non parallèle.

12. Procédé de conception selon l'une quelconque des revendications 9 à 11, dans lequel
l'étape consistant à calculer les informations de conditions de projection calcule une forme et une taille du motif de projection (6a), de sorte que la forme et la taille du motif de projection (6a) varient en fonction d'une distance entre la position de point de vue et des points respectifs sur le motif de projection (6a).

13. Procédé de conception selon l'une quelconque des revendications 9 à 12, dans lequel
les informations de conditions d'observation incluent une répartition de radiance qui est définie de sorte que les radiations du motif de projection (6a) sont uniformes lorsque le motif de projection (6a) est observé depuis la position de point de vue.

FIG. 1

FIG. 2

FIG. 3

FIG. 4A

FIG. 4B

FIG. 4C

FIG. 4D

FIG. 5

FIG. 6A

FIG. 6B

10: DESIGN DEVICE

| OBSERVATION-CONDITION SETTING UNIT | 11 |

$\downarrow$

| PROJECTION-CONDITION CALCULATION UNIT | 12 |

$\downarrow$

| ILLUMINATION-CONDITION CALCULATION UNIT | 13 |

$\downarrow$

| DIFFRACTION-CHARACTERISTIC DESIGN UNIT | 14 |

10: DESIGN DEVICE

# FIG. 7

6a

(a)

(b)

# FIG. 8

FIG. 9

FIG.10

FIG.11

FIG.12A

# FIG.12B

START

TO SET OBSERVATION-
CONDITION INFORMATION — S1

TO CALCULATE PROJECTION-
CONDITION INFORMATION — S2

TO CALCULATE ILLUMINATION-
CONDITION INFORMATION — S3

TO DESIGN DIFFRACTION CHARACTERISTIC
OF DIFFRACTIVE OPTICAL ELEMENT — S4

END

# FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012146621 A
- WO 2017217420 A1
- JP 2015132707 A
- DE 102015012416 A1
- EP 1916153 A2
- DE 102006050548 B4